# EUROPÄISCHE PATENTSCHRIFT

(11) **EP 3 411 212 B1**
(45) Veröffentlichungstag und Bekanntmachung des Hinweises auf die Patenterteilung: **11.08.2021**
(21) Anmeldenummer: 16822470.7
(22) Anmeldetag: 23.12.2016
(51) Int. Cl.: B29D 29/08, B29C 33/30, B29C 45/14, B29C 45/26, B29C 70/54, F16G 1/08, F16G 1/28, F16G 5/06, F16G 5/20

(54) **VERFAHREN ZUM HERSTELLEN EINES TREIBRIEMENS**
METHOD FOR PRODUCING A DRIVE BELT
PROCÉDÉ POUR LA FABRICATION D'UNE COURROIE D'ENTRAÎNEMENT

(30) Priorität: 07.03.2016 DE 102016104124
(43) Veröffentlichungstag der Anmeldung: 12.12.2018
(73) Patentinhaber: Walther Flender GmbH, 40593 Düsseldorf (DE)
(72) Erfinder: SCHOLZEN, DR., Andreas, 47447 Moers (DE); SCHMIDT, Simon-Martin, 40470 Düsseldorf (DE)
(74) Vertreter: Cohausz & Florack
(86) Internationale Anmeldenummer: PCT/EP2016/082642
(87) Internationale Veröffentlichungsnummer: WO 2017/153021

(56) Entgegenhaltungen:
- EP-A1- 0 442 176
- EP-A1- 1 537 984
- EP-A2- 0 280 175
- EP-A2- 2 811 200
- WO-A1-93/18315
- WO-A1-2011/148263
- WO-A1-2013/139659
- DE-A1- 2 123 902
- DE-A1- 2 547 296
- DE-A1- 3 202 473
- DE-T5-112012 004 524
- DE-T5-112012 004 524
- FR-A1- 2 541 933
- FR-A1- 2 665 737
- FR-A1- 2 705 050
- GB-A- 2 082 113
- JP-A- H1 119 972
- US-A- 3 087 201
- US-A- 4 053 547
- US-A- 4 066 732
- US-A1- 2004 058 767
- US-A1- 2012 071 286

## Beschreibung

Die Erfindung betrifft ein Verfahren zum Herstellen von Treibriemen.

### Stand der Technik

Eine Darstellung der aus dem Stand der Technik bekannten unterschiedlichen Vorgehensweisen bei der Herstellung von Treibriemen im Allgemeinen und Zahnriemen im Speziellen findet sich in der DE 10 2013 104 764 A1. Dort wird in Weiterentwicklung dieses Standes der Technik für die Fertigung eines Riemens mit eingebetteten Zugträgern ein Verfahren vorgeschlagen, bei dem ein Zugträger einer vorgeschalteten Präparation unterzogen wird. Der Riemen umfasst dabei einen aus einem Polyurethan mit elastischen Eigenschaften bestehenden Riemenkörper, der eine Decklage als Riemenrücken und einen Unterbau mit einer Kraftübertragungszone und einen in dem Riemenkörper eingebetteten Zugträger aufweist und mit Polyurethan präpariert ist. Eine reproduzierbare Polymerfüllung der Zugträgerhohlräume und damit einhergehend eine hohe Prozesssicherheit soll dabei dadurch gewährleistet werden, dass in einer vorgeschalteten Verfahrensstufe der Riemenfertigung Zugträgerhohlräume des Zugträgers wenigstens zum Teil mit dem Polyurethan gefüllt werden, indem in einer einzigen Präparationsstufe oder in mindestens zwei Präparationsstufen der Zugträger mit einer das Polyurethan oder dessen Ausgangskomponenten und mindestens ein Lösungsmittel oder Dispergiermittel umfassenden Präparationsmischung benetzt und der präparierte Zugträger anschließend getrocknet wird, wobei das Polyurethan zur Füllung der Zugträgerhohlräume gleich dem Polyurethan des Riemenkörpers ist. Durch diese Art und Weise der Herstellung soll eine gleichmäßige Benetzung aller Zugträgerfasern, einschließlich der innersten Zugträgerfasern, und eine gute Anbindung des Zugträgers an den Riemenkörper realisiert werden.

Die Herstellung von Zahnriemen ist des Weiteren in einer allgemeinen Form beispielsweise in Raimund Perneder "Handbuch der Zahnriementechnik", Springer Verlag Berlin Heidelberg, 2009, ISBN 978-3-540-89321-9, S. 29 - 35, beschrieben.

Demnach dominieren für geschlossene Zahnriemen zwei unterschiedliche Basis-Materialien, die wiederum unterschiedliche Herstellverfahren erfordern.

### a) Zahnriemen auf Basis von Synthesekautschuk

Beim ersten Basis-Material handelt es sich um Synthesekautschuk, aus dem vulkanisierte Zahnriemen hergestellt werden.

Die Riemen bestehen aus einem Elastomer (Synthesekautschuk, wie Chloroprene-Kautschuk ("CR"), hydriter Acrylnitrilbutadien- Kautschuk ("HNBR") oder Ethylen-Propylen-Dien-Kautschuk ("EPDM")), einem Zugträger (meist Glasfasern, alternativ Fasern, Litzen oder Drähte aus Aramid, Carbon oder Stahl) und einem Polyamidgewebe auf der Zahnseite. Das Gewebe reduziert den Verschleiß und steigert die Scherfestigkeit der Zähne.

Die Herstellung jeder diskreten Zahnriemenlänge erfordert eine eigene Form. Über diese Form wird zunächst das Gewebe in Form eines Endlosstrumpfes gezogen. Um das Gewebe werden dann spiralförmig über die Formbreite ein einziger oder zwei parallele Zugträger gespult. Die Zugkraft im Zugträger fixiert das Gewebe und bestimmt die spätere Länge des fertigen Riemens. Die Stärke des Gewebes bestimmt auch die Lage des Zugträgers im Riemen.

Als dritte Lage wird das Elastomer um den Zugträger gewickelt. Die so vorbereitete Form wird in Vulkanisationskessel eingesetzt. Unter Einwirkung von Druck und Temperatur werden die Zähne ausgeformt und es erfolgt die Vernetzung des Kautschuks durch Vulkanisation. Durch den Druck fließt das Elastomer zwischen den Zugträgern hindurch und füllt die Zahnlücken aus. Die Viskosität ist so abgestimmt, dass das Material zwischen den Zugträgern hindurch fließt, jedoch nicht das Gewebe durchdringen kann. Das Gewebe wird somit gedehnt und mit in die Lücken gepresst.

Diese Riemen werden immer mit Gewebe produziert. Häufig wird der Rücken der Riemen überschliffen, um Unregelmäßigkeiten zu egalisieren und eine gleichmäßige Rückendicke zu erzielen.

### b) Zahnriemen auf Basis von Gießpolyurethan

Beim zweiten Material handelt es sich um Gießpolyurethan ("PU").

Bei der Herstellung von Zahnriemen aus Polyurethan kommen üblicherweise Gießpolyurethane aus zwei oder mehr Komponenten zum Einsatz.

In aller Regel werden zur Kraftübertragung in die PU-Matrix Stahlzugträger eingelagert. Aramid ist ebenfalls möglich. Glasfaser findet in diesen Riemen bis heute keine nennenswerte Verwendung.

Auch bei der Herstellung von Zahnriemen aus PU erfordert jede diskrete Zahnriemenlänge eine eigene Form. Der Kern wird mit dem Stahlzugträger umwickelt. Die Außenform wird mit einer definierten Menge PU gefüllt. Der umwickelte Kern wird in die Außenform eingebracht und das PU durch den eindringenden Kern verdrängt (Verdrängungsguss). Die Luft entweicht dabei nach oben.

In einer weiteren Verfahrensvariante wird der umwickelte Kern zunächst in die Form eingebracht und dann von unten her PU injiziert. Das PU steigt dann langsam von unten nach oben in der Form auf. Ziel ist immer die Luftverdrängung von unten nach oben um Lufteinschlüsse im PU zu vermeiden. Ergänzend kann ein Vakuum zur Unterstützung dieses Vorgangs eingesetzt werden.

Als anderes Verfahren für die Herstellung von Zahnriemen mit einer PU-Matrix ist das Schleuder-Gießen zu nennen, bei dem der fließfähige Kunststoff unter Ausnutzung von Rotationskräften in die Form des Zahnriemens gebracht wird.

Eine Besonderheit der voranstehend erwähnten Vorgehensweisen sind die sogenannten Wickelnasen, die für die Führung der Zugträger auf der Form vorhanden sein müssen. Die Wickelnasen bestimmen die Position bzw. Lage der Zugträger im fertigen Zahnriemen. Ohne die Wickelnasen würden die Zugträger auf den Köpfen der Zahnriemenform aufliegen. Es könnte kein Elastomer zwischen Zugträger und Zahnkopf fließen. Bei den fertigen Riemen würden dann jeweils in den Zahnzwischenräumen die Zugträger offen liegen und bekämen je nach Profilüberdeckung direkten Kontakt zur Riemenscheibe, was einen erheblichen Verschleiß zur Folge hätte.

Mit Hilfe der Wickelnasen liegt nun zwischen Stahlzugträger und Scheibenkopf immer eine dünne PU Schicht. Dennoch bleibt, bedingt durch die Auflage des Zugträgers auf der Wickelnase, eine Linie in der Zahnlücke, die zwar keinen direkten Kontakt zur Scheibe erhält, dennoch aber das Eindringen eventuell schädigender Fremdmedien (Feuchtigkeit, Chemikalien, etc.) ermöglicht und damit einen potenziellen Keim für vorzeitige Schädigungen des Riemens bildet.

Ein prinzipieller Nachteil der voranstehend erläuterten bekannten Herstellverfahren besteht auch darin, dass es mit diesen Verfahren nicht möglich ist, den herzustellenden Riemen im Herstellprozess auf seiner Zahnseite mit einer im Verfahren selbst in Form gebrachten Gewebelage auszustatten. Auch ein nachträgliches Aufbringen des Gewebes beispielsweise durch Kleben ist nicht ohne Weiteres möglich, da dadurch die Zahngeometrie unzulässig verändert würde. So kann allenfalls eine vorgeformte Gewebelage in die jeweilige Form eingebracht werden. Der für die Formgebung und das Einbringen einer solchen Gewebelage erforderliche Aufwand ist jedoch beträchtlich.

Glasfaserzugträger oder ähnlich bruchempfindliche Fasern werden in den konventionell hergestellten Riemen ebenfalls nicht eingesetzt, weil die empfindlichen Filamente beim Entformen des Riemens unter Vorspannkraft über die Wickelnasen gezogen werden müssten, wodurch sie beschädigt werden könnten.

### c) Weitere Verfahren

Neben den beiden voranstehend erläuterten, die Praxis dominierenden Materialien und Verfahrensweisen ist es auch vorgeschlagen worden, Zahnriemen durch Spritzgießen herzustellen.

Beispiele für die voranstehend erläuterten, im Stand der Technik etablierten Verfahren, bei denen gießfähige Elastomere in eine Form eingebracht werden, um den Treibriemen zu formen, sind in den Patentveröffentlichungen US 4,066,732, FR 2 541 933 A1 und DE 32 02 473 A1 beschrieben, während in den Patentveröffentlichungen WO 93/18315 A1, WO 2011/148263 A1, DE 11 2012 004 524 T5, DE 25 47 296 A1 Verfahren erläutert sind, bei denen Treibriemen durch thermoplastische Umformungen eines Basismaterials hergestellt werden. In der EP 2 811 200 A2 ist darüber hinaus ein Zahnriemen beschrieben, der mit einer textilen Lage belegt ist.

So wird beim in der US 4,066,732 offenbarten Verfahren ein Gießwerkzeug bereitgestellt, indem ein Formkern in eine Außenform gesetzt wird, so dass zwischen dem Formkern und der Außenform eine Kavität vorhanden ist. Die abzubildende Geometrie des Treibriemens befindet sich dabei auf der Umfangsfläche des Formkerns. Zur Herstellung des Treibriemens wird eine Textillage auf die äußere Geometrie des Formkerns gelegt, wobei zur Erhöhung der Haftung vor dem Aufbringen der Textillage eine klebrige Beschichtung auf die Umfangsfläche des Formkerns aufgetragen wird. Ist die Textillage positioniert, wird der Formkern in das Gießwerkzeug eingesetzt und das flüssige Elastomer in die Kavität gegossen.

Bei dem aus FR 2 541 933 A1 bekannten Verfahren zur Herstellung von Treibriemen wird eine Textillage in einem vorgelagerten Formgebungsprozess so umgeformt, dass ihre Form der abzubildenden Geometrie des Formkerns entspricht. In dem Formgebungsprozess wird die Textillage, die hier aus einem mit einem Elastomer behandelten Stoff besteht, zwischen zwei komplementäre Formen gelegt. Die Formen werden erhitzt und zusammengedrückt, bis das Elastomer ausgehärtet ist. Die Textillage erhält so die durch die Formen vorgegebene Form, die wiederum perfekt der am Treibriemen abzuformenden Geometrie entspricht. Die so vorgeformte Textillage wird um einen Formkern gelegt, an dessen Umfang die betreffende Geometrie ausgebildet ist.

In der DE 32 02 473 A1 ist ebenfalls ein Verfahren zur Herstellung eines Zahnriemens unter Verwendung einer Gießform beschrieben, die aus einem äußeren Gehäuse und einem in das Gehäuse einführbaren Kern zusammengesetzt ist. Die abzubildende Geometrie ist dabei entweder an der Innenumfangsfläche des äußeren Gehäuses oder an der Außenumfangsfläche des Kerns vorhanden. Auch hier kommt ein vorgeformtes Gewebe zum Einsatz, das an die jeweils abzubildende Geometrie der Form angepasst ist. Der Halt an der Geometrie ergibt sich dabei durch das in den Formhohlraum der Gießform eingedrückte Gussmaterial, aus dem die Basis des Riemens geformt wird.

Beim aus der WO 93/18315 A1 bekannten Verfahren zur Herstellung von Triebriemen wird auf eine mit der abzubildenden Geometrie auf ihrer Außenumfangsfläche versehene Trommel zunächst eine Textillage aufgelegt. Dann werden ein Zugträger sowie diverse weitere Schichten thermoplastischen Materials und schließlich ein Schrumpfband aufgewickelt. Ist der Schichtaufbau beendet, wird eine Blase aus Metall oder Gummi über die Trommel gestülpt und in die Trommel heißer Dampf eingebracht. Durch die damit einhergehende Temperaturerhöhung wird zum einen die Erweichungstemperatur des thermoplastischen Materiales erreicht. Zum anderen beginnt das Schrumpfband zu schrumpfen und drückt das thermoplastische Material in die dafür vorgesehenen Vertiefungen der Trommel. Der eingeführte Dampf erzeugt zudem Druck, welcher die Blase zum Einfallen zwingt und bewirkt, dass sich thermoplastisches Material in sämtliche vorhandenen Lücken drückt, um alle Schichten miteinander zu verbinden.

Die WO 2011/148263 A1 beschreibt ein Verfahren zur Herstellung von Treibriemen, bei dem eine bewegliche Form und eine zylindrische fest angeordnete Form eingesetzt werden, wobei die feste Form an ihrer äußeren Umfangsfläche die am Riemen abzubildende Geometrie aufweist. Über die feste Form wird eine zylindrische Textillage gelegt, so dass sie die abzubildende Geometrie abdeckt. Daraufhin wird ein Zugträger um die mit der Textillage belegte Form gewickelt. Ein Rohmaterial aus Gummi wird zugeschnitten und zusätzlich um den Zugträger gewickelt. Anschließend wird das um die Form gewickelte Gummimaterial durch die äußere Form abgedeckt. Dieser Zusammenbau wird dann einem Vulkanisierungsschritt zugeführt, in welchem das Gummi schmilzt, sich dabei zum einem der Form anpasst und zum anderen um den Zugträger legt.

In der DE 11 2012 004 524 T5 wird ein Verfahren zur Herstellung von Treibriemen durch thermische Formgebung beschrieben, bei dem auf eine innere Form diverse Kautschuklagen gewickelt werden. Die erste auf die innere Form gewickelte Schicht stellt die spätere Außenschicht des Treibriemens dar. Zwischen diversen nicht-vernetzen Kautschuklagen wird ein Zugträger gewickelt. Auf die zuletzt gewickelte Kautschuklage kommt eine Textillage, welche später die Treibriemengeometrie begrenzt. Sind alle Lagen aufgewickelt, wird die innere Form in eine äußere Form gesetzt, welche zuvor mit Pulver beschichtet wurde. Die äußere Form wird nun erhitzt und ein Druckbeaufschlagungsmittel in die innere Form eingebracht. Dadurch wird diese radial nach außen gedehnt, wobei die nicht-vernetzten Kautschuklagen gegen die äußere Form gedrückt werden und sich mit dem Zugträger und der Textillage verbinden.

Aus der DE 25 47 296 A1 ist zudem ein Verfahren bekannt, bei dem auf eine Kernhülse mehrere Schichten unterschiedlicher Materialien gewickelt werden. Über den so gebildeten Wickel wird eine elastomere, an ihrer Innenseite mit einer Zahngeometrie versehene Hülse 6 gestülpt, die anschließend unter Anwendung von Hitze und Druck so gegen den Wickel gedrückt wird, dass sich an dessen Umfang die Zahngeometrie abbildet

In der EP 2 811 200 A2 ist ein speziell gestalteter Zahnriemen beschrieben. Dabei ist am Rande erwähnt, dass der Zahnriemen mit einer textilen Auflage versehen sein kann. Ein zur Herstellung des Zahnriemens geeignetes Verfahren geht aus dieser Veröffentlichung jedoch nicht hervor.

In der US 2012/0071286 A1 ist schließlich ein Verfahren zur Herstellung eines Riemens beschrieben, bei dem ein Gewebestreifen vorbestimmter Breite schraubenförmig unter einem ersten Schrägungswinkel auf einen Dorn gewickelt wird und bei dem ein Zugkord auf den Dorn über das Gewebe unter einem zweiten Schrägungswinkel gewickelt wird, der kleiner als der erste Schrägungswinkel ist. Um den Zugkord wird dann ein Streifen aus Elastomermaterial um gelegt, der anschließend unter Druck ausgehärtet wird, um auf diese Weise eine Riemenhülse zu bilden. Soll ein Zahnriemen hergestellt werden, so kann der Gewebestreifen, beispielsweise durch ein Vakuumformen, so vorgeformt werden, dass er die am Zahnriemen abzubildenden Zähne aufweist. Ein so hergestellter Zahnriemen hat eine Gewebenaht, die sich über mehrere Zähne erstreckt und einen Schrägungswinkel aufweist.

Eine besondere Herausforderung stellt die Herstellung von Zahnriemen dar, die eine Polyurethan-Matrix (Duroplast oder Thermoplast) aufweisen, in die Zugträger auf Faserbasis, wie beispielsweise Zugträger auf Basis von Glas-oder Hochleistungsfasern, eingebettet sind und die ein zahnseitiges Gewebe besitzen.

Zur Optimierung der Biegewechselfestigkeit von Zahnriemen der hier in Rede stehenden Art wäre jedoch der Einsatz von Fasern, insbesondere Glasfasern, Hochleistungsfasern oder desgleichen, wünschenswert.

Ein Gewebe zwischen Zugträger und Riemenform würde zudem die Gebrauchseigenschaften von Zahnriemen aus PU (Poly-Urethan) zusätzlich optimieren und die Wickelnasen überflüssig machen.

Ziel der Erfindung war es, eine vereinfachte Herstellung von Treibriemen, insbesondere Zahnriemen, zu ermöglichen. Dabei sollte es das erfindungsgemäße Verfahren optimalerweise erlauben, Treibriemen, insbesondere Zahnriemen, auch aus alternativen Materialien, wie Kautschuk-Materialien, beispielsweise Naturkautschuk oder Synthesekautschuk, Materialien auf Silikonbasis, sowie jedes weitere alternative Kunststoffmaterial herzustellen, das zur Riemenherstellung mittels Anwendung von Gießverfahren geeignet ist.

Die Erfindung schlägt zu diesem Zweck das in Anspruch 1 angegebene Verfahren vor, mit dem Treibriemen, insbesondere Zahnriemen, in besonders wirtschaftlicher und technologisch optimierter Weise hergestellt werden können.

Vorteilhafte Ausgestaltungen der Erfindung sind in den abhängigen Ansprüchen und in der nachfolgenden Beschreibung angegeben, in der auch der allgemeine Erfindungsgedanke näher erläutert wird.

Das erfindungsgemäße Verfahren zur Herstellung eines Zahnriemens, umfasst demnach mindestens folgende Arbeitsschritte:
a) Bereitstellen eines Formkerns und einer Außenform eines Gießwerkzeugs, wobei der Formkern dazu vorgesehen ist, in die Außenform eingesetzt zu werden, so dass zwischen der Außenform und dem in ihr sitzenden Formkern eine die Form des herzustellenden Treibriemens abbildende Kavität gebildet ist, und wobei die der Kavität zugeordnete Umfangsfläche des Formkerns oder die der Kavität zugeordnete Innenumfangsfläche der Außenform mit einer am Treibriemen abzubildenden Geometrie versehen ist, die durch Vertiefungen oder Erhebungen gebildet ist, die durch aufeinander stoßende Flächen begrenzt sind, welche in die Umfangsfläche des Formkerns oder die Innenumfangsfläche der Außenform eingeformt oder an die Umfangsfläche des Formkerns oder die Innenumfangsfläche der Außenform angeformt sind;
b) Auflegen eines Textils auf die am Treibriemen abzubildende Geometrie;
c) Einsetzen des Formkerns in die Außenform, so dass der Formkern und die Außenform zwischen sich die Kavität umgrenzen;
d) optional: Anordnen eines Zugträgers in der Kavität;
e) optional: Verschließen der Kavität zumindest im Bereich der am Treibriemen abzubildenden Geometrie gegenüber der Umgebung;
f) Anlegen der Textillage an die Flächen, die am Formkern oder an der Außenform die am Treibriemen abzubildende Geometrie begrenzen, durch Erzeugen eines Unterdrucks im Bereich der Freiräume, die nach dem Arbeitsschritt b) zwischen der Textillage und der Geometrie vorhanden sind;
g) Einbringen eines gießfähigen Elastomer-Basismaterials in die Kavität, wobei das in die Kavität eindringende Basismaterial gegen die an der abzubildenden Geometrie anliegende Textillage drückt und der Unterdruck nach wie vor aufrechterhalten wird;
h) optional: Nachdrücken von Basismaterial nach der vollständigen Füllung der Kavität mit dem Basismaterial, um eine Druckerhöhung in der Kavität zu bewirken;
i) optional: Aufrechterhalten des auf das Basismaterial wirkenden Drucks solange, bis das Basismaterial ausreichend fest geworden ist;
j) Entformen des erhaltenen Riemenwickels.

Wenn im vorliegenden Text eine Maßnahme, ein Arbeitsschritt oder ein Merkmal als "optional" bezeichnet ist, dann ist damit gemeint, dass diese Maßnahme, dieser Arbeitsschritt oder dieses Merkmal jeweils nicht notwendig Bestandteil der Erfindung ist, sondern wahlweise verwirklicht werden kann, um den im Zusammenhang mit der betreffenden optionalen Maßnahme, dem betreffenden optionalen Arbeitsschritt oder dem betreffenden optionalen Merkmal erläuterten Vorteil oder Effekt zu erzielen.

Das erfindungsgemäße Verfahren eignet sich gleichermaßen für die Herstellung von Treibriemen, die eine geschlossene Form aufweisen, also beispielsweise bei Nichtgebrauch kreisförmig sind, oder die nicht geschlossen sind, d.h. einen definierten Anfang und ein definiertes Ende besitzen.

Für das erfindungsgemäße Verfahren wird folglich ein Gießwerkzeug mit einer Außenform und einem in die Außenform eingesetzten Formkern verwendet.

Hierzu wird ein Formkern bereitgestellt, der an seinem Umfang mit der am Riemen abzubildenden Geometrie versehen ist. Im Fall, dass mit dem erfindungsgemäßen Verfahren ein Zahnriemen hergestellt werden soll, handelt es sich bei dieser Geometrie um das Negativ der am Riemen abzubildenden Zahngeometrie. Alternativ oder ergänzend kann die am Treibriemen abzubildende Geometrie auch an der der Kavität zugeordneten Innenumfangsfläche der Außenform des Gießwerkzeugs ausgebildet sein.

Beim erfindungsgemäßen Verfahren wird ein Textil auf die am Treibriemen abzubildende Geometrie des Gießwerkzeugs aufgelegt. Im Fall, dass es sich bei der am Treibriemen abzubildenden Geometrie um eine Zahngeometrie handelt, wird das Textil dazu so um den Formkern oder an die Außenform gelegt, dass die Gewebelage an den Zahnstirnflächen der Zahngeometrie des Formkerns oder der Außenform abgestützt ist.

Als "Textil" werden hier alle für technische Zwecke vorgesehenen, flächig sich erstreckenden Gebilde verstanden, die aus miteinander verbundenen Fäden oder Fasern hergestellt sind. Dazu gehören die durch Webverfahren hergestellten Gewebe, welche sich für die erfindungsgemäßen Zwecke besonders eignen. Es können jedoch auch Gewirke, Gestricke, Gelege und alle sonstigen Textilien zum Einsatz können, die beim fertigen erfindungsgemäß hergestellten Treibriemen den Zweck der dort erfindungsgemäß vorgesehenen Textillage erfüllen.

Vor oder nach dem Auflegen der textilen Lage wird der Formkern in die die Außenform des Treibriemens abbildende Außenform gesetzt, so dass die Außenform und der Formkern zwischen sich die Kavität begrenzen, die die Form des herzustellenden Treibriemens insgesamt bestimmt.

Insbesondere dann, wenn das Anlegen der textilen Lage an die am Treibriemen abzubildende Geometrie durch Beaufschlagung mit einem Unterdruck unterstützt werden soll, kann es zweckmäßig sein, die zwischen der Außenform und dem Formkern gebildete Kavität gegenüber der Umgebung zumindest in dem Bereich dicht zu verschließen, in dem die am Treibriemen abzubildende Geometrie vorgesehen ist.

Zur Unterstützung des Anlegens der textilen Lage an die am Treibriemen abzubildende Geometrie kann mindestens im Bereich der zwischen der Textillage und dem Formkern noch vorhandenen Freiräume ein Unterdruck erzeugt werden. In Folge dieses optional angelegten Unterdrucks legt sich die Textillage an die Flächen an, die die am Treibriemen abzubildende Geometrie begrenzen. Im Fall einer an einem Zahnriemen abzubildenden Zahngeometrie sind dies die Flanken der Zähne der Zahngeometrie des Formkerns und die Grundfläche der zwischen den Zähnen der Zahngeometrie jeweils vorhandenen Zahnlücke, an die sich die textile Lage in Folge der Evakuierung der im Bereich der abzubildenden Zahngeometrie vorhandenen Freiräume an die abzubildende Geometrie anlegen.

Für die optionale Erzeugung des Unterdrucks können im Bereich der Geometrie Absaugbohrungen vorgesehen sein, die an den die abzubildende Geometrie begrenzenden Flächen, im Fall einer Zahngeometrie insbesondere an den Zahnstirn- oder Zahnflankenflächen der Zähne oder an den Grundflächen der Zahnlücken der Zahngeometrie, enden. Über die Ansaugbohrungen wird die in den Freiräumen vorhandene Atmosphäre abgesaugt, bei der es sich typischerweise um Luft handeln dürfte. Auf diese Weise entsteht durch das Absaugen zwischen dem Textil und der abzubildenden Geometrie ein Unterdruck, durch den das Textil an die Flächen der Geometrie angesaugt und so am Formkern bzw. der Außenform gehalten wird.

Optimalerweise ist das Textil möglichst dicht und damit schwach-luftdurchlässig bis luftdicht ausgebildet. Auf diese Weise kann das mittels der Evakuierung der Atmosphäre bewirkte Anlegen an die abzubildende Geometrie schon bei vergleichbar gering dimensionierten Absaugströmen oder Unterdrücken ausgelöst werden.

Um die Anbindung der Textillage an den Basiswerkstoff des Grundkörpers eines erfindungsgemäßen Treibriemens zu optimieren, kann das Textil der Textillage mit einer gegenüber dem Basiswerkstoff reaktionsfähigen Beschichtung versehen sein. Auf diese Weise kann eine intensive stoffschlüssige Anbindung der Textillage an den Grundwerkstoff erreicht werden. Zu diesem Zweck wird bevorzugt ein mit dem Basiswerkstoff artverwandter Werkstoff verwendet. Wird also der Grundkörper beispielsweise aus einem PU-Basiswerkstoff geformt, ist es zweckmäßig, auch die Beschichtung des Textils der textilen Lage oder die Textillage im Ganzen mit demselben oder einem gleichartigen PU-Werkstoff zu beschichten, der mit dem Basiswerkstoff reagiert, wenn dieser in die Kavität der Gießform eingebracht wird.

Wird eine Beschichtung auf die textile Lage oder das diese Textillage bildende Textil aufgebracht, so hat es sich insbesondere im Fall, dass das Anlegen der textilen Lage an die am Treibriemen abzubildende Geometrie durch Beaufschlagung mit einem Unterdruck unterstützt werden soll, als besonders vorteilhaft erwiesen, wenn die textile Lage durch die Beschichtung weitestgehend gasdicht ist. Unterstützt werden kann das Anlegen des Textils an die abzubildende Geometrie zudem dadurch, dass das Textil längselastisch ist. Dies erweist sich insbesondere dann als vorteilhaft, wenn die mit dem Textil zu belegende, am herzustellenden Treibriemen abzubildende Geometrie am Formkern ausgebildet ist. Durch seine Längselastizität kann das Textil beim Einlegen in die Form bereits in einem gewissen Maß vorgespannt sein und damit gewährleistet werden, dass das Textil schon im eingelegten Zustand eine geometrisch einwandfrei bestimmte Form besitzt. Die ihm eigene Elastizität erlaubt es dem Textil dann, sich trotz der Vorspannung in Folge des optionalen Absaugens der im Bereich der Geometrie vorhandenen Gase, wie beispielsweise Luft, oder des von dem Basismaterial ausgeübten Drucks so zu längen, dass es sich einwandfrei an die am Treibriemen abzubildende Geometrie des Formkerns anlegt. Besonders günstig erweist sich dies dann, wenn es sich bei der abzubildenden Geometrie um eine Zahngeometrie handelt.

Die textile Lage kann ein- oder mehrlagig an der abzubildenden Geometrie angeordnet werden, um den in der Praxis auftretenden Belastungen unter Berücksichtigung der jeweiligen Eigenschaften des für die Textillage verwendeten Materials gerecht zu werden.

Nach dem durch die Unterdruckbeaufschlagung unterstützten Anlegen an die am Treibriemen abzubildende Geometrie der Gießform muss das Textil nicht perfekt an den Flächen der am Treibriemen abzubildenden Geometrie anliegen, sondern dort lediglich so gehalten sein, dass an jeder der mit Textil zu bedeckenden Flächen der abzubildenden Geometrie zumindest abschnittsweise Textil anliegt.

Nachdem die Textillage in der voranstehend erläuterten Weise an den die abzubildende Geometrie begrenzenden Flächen des Formkerns oder der Außenform vorpositioniert ist, wird das jeweilige Basismaterial des herzustellenden Treibriemens in die Kavität des formgebenden, den Formkern und die Außenform umfassenden Werkzeugs gespritzt. Das Einbringen des Basismaterials erfolgt dabei bevorzugt mit Drücken, die unterhalb der beim konventionellen Spritzgießen von Elastomeren üblichen Drücke liegen. So werden für das erfindungsgemäße Verfahren Drücke von weniger als 100 bar bevorzugt. In der Praxis als besonders geeignet erweisen sich hier Drücke von höchstens 50 bar, insbesondere von 2 - 50 bar, wobei von Drücken, die weniger als 50 bar, wie bis zu 45 bar oder bis zu 40 bar, in der Praxis besonders gute Füllergebnisse erwartet werden können.

Sofern in der Kavität beim Einbringen des Basismaterials Gas, wie beispielsweise Luft, vorhanden war, wird diese durch das Basismaterial verdrängt und kann über hierzu vorgesehene Ventile, Abströmöffnungen, Ausgleichsbehälter und desgleichen entweichen. Das Austreiben des jeweiligen Gases kann dabei dadurch begünstigt werden, dass an der Gießform mindestens ein Überlaufbereich vorgesehen ist, in den gezielt in die Kavität der Gießform eingebrachtes überschüssiges Basismaterial hineinläuft, nachdem die Gießform vollständig gefüllt ist.

Das in die Kavität eindringende Basismaterial drückt gegen die an der abzubildenden Geometrie anliegende Textillage und sorgt gemeinsam mit dem nach wie vor aufrechterhaltenen Unterdruck dafür, dass die Textillage glatt an die ihr zugeordneten Flächen der Geometrie in einer Weise angedrückt wird, dass die Textillage auch perfekt die Übergänge zwischen den einzelnen Flächen der Geometrie abdeckt. Auf diese Weise lässt sich auch an vergleichbar komplex geformten Zahngeometrien ohne großen Aufwand sicherstellen, dass die die Zahngeometrie begrenzenden Flächen gleichmäßig und exakt mit der Textillage bedeckt sind.

Die gleichmäßige Bedeckung der die abzubildende Geometrie begrenzenden Flächen mit der Textillage kann zusätzlich dadurch unterstützt werden, dass nach der vollständigen Füllung der Kavität mit dem Basismaterial optional eine Druckerhöhung bewirkt wird, indem weiteres Basismaterial in die Kavität nachgedrückt wird. Durch diese gezielte Druckerhöhung wird zudem die vollständige Ausfüllung der am Treibriemen abzubildenden Geometrie mit Basismaterial optimal sichergestellt. Daher erweist sich dieser Arbeitsschritt insbesondere bei der Füllung von am herzustellenden Riemen abzubildenden Zahngeometrien als besonders sinnvoll.

Der jeweils auf das Basismaterial wirkende Druck wird solange aufrechterhalten, bis das Basismaterial ausreichend fest geworden ist.

Erforderlichenfalls durchläuft der Riemen zur Einstellung seiner Eigenschaften in an sich bekannter Weise eine optional zusätzliche Temperbehandlung.

Anschließend wird der erhaltene Riemenwickel entformt.

Im Fall, dass die abzubildende Geometrie des Treibriemens am Formkern ausgebildet ist, wird sie an der Innenseite des Riemens erzeugt. Es ist jedoch genauso möglich, die Geometrie des Riemens zunächst an dessen außenliegender Rücken-seite auszubilden. Beispielsweise im Fall einer Zahngeometrie wird dann die Zahnung des Riemens nicht durch den Formkern, sondern die an der Außenform ausgebildete Zahngeometrie abgebildet. Erforderlichenfalls kann dann der erhaltene Zahnriemen nach seiner Herstellung umgekrempelt werden, so dass die zuvor außenliegende Zahnung beim verkaufs- oder einsatzfertigen Produkt auf der Innenseite des Riemens vorhanden ist.

Mit dem erfindungsgemäßen Verfahren herzustellende Treibriemen können mit einem Zugträger ausgestattet sein, der die im praktischen Einsatz auf den Treibriemen wirkenden Kräfte aufnimmt.

Der nach der Formfüllung aufrechterhaltene, auf das Basismaterial wirkende Druck fördert die Durchdringung des Zugträgers mit dem Basismaterial und reduziert damit die innere Reibung der einzelnen Filamente, aus denen der Zugträger aufgebaut ist. Überraschend hat sich gezeigt, dass es trotz der vergleichbar geringen Einspritzdrücke bei erfindungsgemäßer Vorgehensweise zu einer vollständigen Durchdringung des Zugträgers kommt und eine optimale Anbindung des Zugträgers an das Basismaterial gewährleistet ist, ohne dass es dazu besonderen Aufwands, wie einer besondere Vorbeschichtung oder desgleichen bedarf. Durch die so erzielte intensive Einbettung der Zugträger in den Basiswerkstoff wird die Lebensdauer von erfindungsgemäß erzeugten Zahnriemen insgesamt verbessert.

Die erfindungsgemäße Vorgehensweise erlaubt es somit, einen optional vorgesehenen Zugträger im unbeschichteten Zustand in der Kavität der Gießform zu platzieren und so in den Basiswerkstoff einzubetten, dass der Zugträger intensiv an den Basiswerkstoff angebunden ist und die im Betrieb auf den Treibriemen lastenden Zugkräfte sicher aufnehmen kann. Dies schließt selbstverständlich nicht aus, den Zugträger mit einer Beschichtung, beispielsweise einer Haft zu versehen, wenn dies aus herstellungstechnischer Sicht zweckmäßig ist oder sich aufgrund von Besonderheiten des Materials der jeweils eingesetzten Zugträger für eine optimierte Anbindung als günstig erweist. Jedoch muss dieser Aufwand bei erfindungsgemäßer Herstellung eines Treibriemens nicht notwendig getrieben werden, um eine funktionsgerechte Anbindung des Zugträgers an das Basismaterial des Treibriemens zu erzielen. Jedenfalls unterstützt bei erfindungsgemäßer Herstellweise auch dann, wenn beschichtete Zugträger verwendet werden, das Eindringen des Basiswerkstoffs in die zwischen den einzelnen Zugträgerfasern oder -strängen vorhandenen Freiräume die Anbindung des Zugträgers an den Grundkörper.

Der optional vorgesehene Zugträger wird in der Kavität der erfindungsgemäß ausgebildeten Gießform angeordnet.

Hierzu kann er vor dem Einsetzen des Formkerns (Arbeitsschritt c)) um den Formkern gelegt werden. Liegt der Zugträger als Einzelfaser, als Faserstrang, Faserbündel oder streifenförmig, beispielsweise nach Art eines Textilstreifens, ausgebildet vor, so wird der Zugträger zu diesem Zweck in einer oder mehreren Lagen um den Formkern gewickelt. Der Zugträger wird hierbei bevorzugt spiralförmig um den Formkern gelegt. In dem auf diese Weise der Zugträger nach Art eines Schraubengewindes mit einem bezogen auf die Längsachse des Formkerns schrägen Verlauf am Formkern angeordnet wird, lässt sich der Zugträger unterbrechungsfrei um den Formkern legen und eine optimale Wirkung im herzustellenden Treibriemen gewährleisten. Um die Belastbarkeit der Zugträgerlage an die im praktischen Gebrauch auftretenden Belastungen anzupassen, können die Zugträger erforderlichenfalls ein- oder mehrlagig in der Kavität der Gießform angeordnet werden.

Alternativ oder ergänzend ist es wiederum optional möglich, einen Zugträger mit Abstand zur Zahngeometrie in der Kavität und damit auch im fertigen Treibriemen mit Abstand zur Textillage anzuordnen. Hierzu kann nach dem Einsetzen des Formkerns in die Außenform und vor dem Einspritzen des Basismaterials ein Zugträger mittels beweglicher Hilfselemente in der Kavität der Gießform mit Abstand zu der Textillage positioniert werden. Die Hilfselemente werden dann nach einem Einspritzen einer ersten Portion des Basismaterials schrittweise oder kontinuierlich unter Zurücklassen des Zugträgers in dem Basismaterial aus der Kavität hinausbewegt.

Der Zugträger wird bei dieser Variante also, sofern vorgesehen, mittels Halteelementen seiner späteren Lage im herzustellenden Treibriemen entsprechend in der Kavität des Werkzeugs positioniert. Um dabei eine Positionierung des Zugträgers im freien Raum der Kavität zu ermöglichen, ohne dass Haltenasen oder desgleichen erforderlich sind, sind die Halteelemente beweglich in dem Werkzeug gelagert und das Einspritzen des Basismaterials erfolgt in mindestens zwei Schritten. Der erste Einspritzschritt wird dabei so durchgeführt, dass der jeweilige Zugträger durch das eingespritzte Basismaterial vorläufig gehalten ist und diese Position beibehält, während die Halteelemente aus dem vom Basismaterial erfassten Bereich des Zugträgers entfernt werden. In einem zweiten Einspritzschritt werden dann die von den nun nicht mehr in der Kavität vorhandenen Halteelementen hinterlassenen Hohlräume geschlossen.

Selbstverständlich kann das Entfernen der Halteelemente und das Schließen der von ihnen jeweils hinterlassenen Höhlungen auch in mehr als zwei Teilschritten durchgeführt werden, also beispielsweise immer nur so viele Halteelemente entfernt werden, dass die Zugträger-Lage ihre Sollposition sicher beibehält, bis die folgende Basismaterial-Portion eingespritzt wird, um das von den Halteelementen nach ihrem Entfernen nicht mehr eingenommene Volumen zu füllen.

Ebenso selbstverständlich kann das Entfernen der Halteelemente und das Nachspritzen von Basismaterial in einem quasi-kontinuierlichen Schrittablauf durchgeführt werden, indem beispielsweise während des Entfernens der Halteelemente dauerhaft Basismaterial an der Kavität ansteht und der von den Halteelementen beim Entfernen aus der Kavität frei werdende Raum sofort wieder mit nachrückendem Basismaterial geschlossen wird.

Die Halteelemente können beispielsweise als längs- oder radialverschiebbare Schieber, Stangen, Stifte oder desgleichen ausgebildet sein. Die Halteelemente können so geformt sein, dass es zu einer Linienberührung mit dem Zugträger kommt. Hierzu können Halteelemente in Form von Schwertern, Schienen oder Stäben eingesetzt werden. Diese sind insbesondere dann geeignet, wenn die am Treibriemen abzubildende Geometrie an der Außenumfangsfläche des Formkerns ausgebildet ist. Bei einer Fertigung, bei der die Zähne an der Rückenseite des Zahnriemens geformt werden, kann, abhängig von der Form des jeweiligen Werkzeugkerns als Haltelement auch ein Stützring oder eine Stützschiene eingesetzt werden.

Soll der herzustellende Treibriemen mit einem Zugträger ausgestattet werden, so kann dies auf besonders vorteilhafte Weise dadurch bewerkstelligt werden, dass der Zugträger direkt auf die Textillage aufgebracht wird. Im Fall der Herstellung von Zahnriemen ist der Zugträger auf diese Weise über die textile Lage direkt auf den Zahnstirnflächen der Zahngeometrie abgestützt. Bei direkter Auflage auf die textile Lage bestimmt die Stärke des Textils die Position des Zugträgers im Riemen.

Üblicherweise werden auch beim erfindungsgemäßen Verfahren die Treibriemen als Wickel hergestellt, deren Breite wesentlich größer ist als die Sollbreite eines einzelnen handelsfertigen Treibriemens. Von den Wickeln werden die Treibriemen in diesem Fall wie üblich in einem Konfektionierungsschritt mit der für den jeweiligen Verwendungszweck vorgesehenen Breite abgeteilt.

Im Fall, dass mit der Erfindung Zahnriemen hergestellt werden sollen, können in der voranstehend erläuterten Weise Zahnriemen mit einer Verzahnung auf der Rückenseite oder der zur Rückenseite gegenüberliegenden Innenseite oder auf beiden Seiten (DL-Zahnriemen) erzeugt werden.

Wie oben bereits erwähnt, wird bei Produktion von Treibriemen mit außenliegender, am Rücken des Treibriemens abzubildender Geometrie, insbesondere Zahngeometrie, der jeweils erhaltene Riemen erforderlichenfalls nach der formgebenden Herstellung umgekrempelt, um die zuvor außenliegende, an ihm abgebildete Geometrie, also insbesondere eine Zahngeometrie, auf die Innenseite zu wenden. Ist der nach der Formgebung erhaltene Wickel für ein solches Umkrempeln zu breit oder zu steif, kann dieser Arbeitsschritt optional nach dem Konfektionieren der Treibriemen durchgeführt werden.

Die Zugträger können in erfindungsgemäß hergestellten Treibriemen, insbesondere Zahnriemen, aus folgenden Materialien bestehen:
Stahldrähte, Stahllitzen, Glasfasern, Hochleistungsfasern, wie Aramid, CarbonFasern, Polyester-Fasern oder alternative Materialien vergleichbarer Belastbarkeit, wie Hybridzugträger, die aus zwei oder mehreren verschiedenen Materialien, wie Carbon- und Glasfasern, gebildet sind.

Unabhängig davon, wie und wo die Zugträger in der Gießform positioniert werden, können sie beispielsweise als Einzelfasern, als Strang, als Wickel oder als Gelege in das Werkzeug eingelegt werden. Um die Belastbarkeit der Zugträgerlage an die im praktischen Gebrauch auftretenden Belastungen anzupassen, können die Zugträger auch hier erforderlichenfalls ein- oder mehrlagig in der Kavität der Gießform angeordnet werden.

Aus fertigungstechnischer Sicht und im Hinblick auf die angestrebten Eigenschaften des herzustellenden Treibriemens vorteilhaft kann es aber auch sein, wenn der Zugträger als Textilzuschnitt ausgebildet ist. Dieses Textil ist vorzugsweise so ausgebildet, dass seine Kett- und Schussfäden Öffnungen umgrenzen, die so groß sind, dass das Basismaterial durch sie hindurchdringen kann. Bei einem derart offenporigen, im fertigen Riemen vom Basismaterial durchdrungenen Textil ist auf einfache Weise eine intensive Verklammerung des Zugträgers mit dem Basismaterial gewährleistet, durch die sichergestellt ist, dass die im Betrieb auf dem Riemen lastenden Kräfte sicher vom Zugträger aufgenommen werden.

Das den Zugträger bildende Textil kann aus Glasfasern, Aramidfasern, Carbonfasern, Polyesterfasern, Stahldrähten, Stahllitzen oder ein anderes als Zugträger geeignetes Material mit ausreichender Festigkeit und Flexibilität hergestellt sein. Selbstverständlich können dabei unterschiedliche Fasern miteinander kombiniert werden, um ein optimiertes Verhalten des Zugträgers unter den im Gebrauch auftretenden Belastungen zu ermöglichen. So kann es beispielsweise zweckmäßig sein, hochfeste Fasern mit besonders flexiblen Fasern zu kombinieren, um bei hoher Zugbelastbarkeit eine ebenso hohe Flexibilität des Zugträgers zu erzielen.

Bei dem Textilzuschnitt kann es sich um ein direkt für die jeweilige Riemenlänge konfektioniertes Schlauchtextil, insbesondere Schlauchgewebe, handeln.

Der Textilzuschnitt kann aber auch als Flachtextil ausgebildet sein. In diesem Fall kann der Textilzuschnitt als Bahn definierter Breite spiralförmig gewickelt in der Kavität der Gießform angeordnet werden.

Der Zugträger-Textilzuschnitt wird in der Kavität der Gießform so angeordnet, dass er einen Schlauch bildet. Die Fügezone, d.h. die Zone, an der die einander zugeordneten Kanten des Textilzuschnitts beim in der Kavität angeordnetem Zuschnitt aufeinander treffen, können dabei mit in Bezug auf die Längsachse des Formkerns oder der Außenform parallel ausgerichtetem, geradem Stoß oder mit in Bezug auf die Längsachse von Formkern und Außenform schräg ausgerichtetem Stoß gefügt werden. Die Stoßkante kann dabei linear geformt sein oder einen mehrfach gezackten, gewellten oder in anderer Form unregelmäßigen Verlauf besitzen. Auch ist es gegebenenfalls zweckmäßig, den Zugträger-Textilzuschnitt mit seinen Kanten nicht auf Stoß, sondern überlappend zu fügen, wenn sich dies im Hinblick auf das jeweilige Verbindungsverfahren als günstig erweist.

Die gegeneinander stoßenden oder einander überlappenden Kanten des Zugträger-Textilzuschnitts können beispielsweise durch Vernähen, Verschweißen (Laser / Ultraschall) oder Verkleben mit einander verbunden werden.

Die in der Kavität jeweils in Umfangsrichtung angeordneten Fäden oder Fasern des Textilzuschnitts haben die Aufgabe, im praktischen Einsatz die auf dem Riemen lastenden Zugkräfte aufzunehmen bzw. zu übertragen. Die parallel zur Längsachse des Formkerns oder der Außenform ausgerichteten Fasern oder Fäden sichern dagegen die Lage der in Umfangsrichtung ausgerichteten Fasern oder Fäden und verhindern so ein Verrutschen der Zugträger beim Einbringen des Basismaterials.

Optimaler Weise ist der Textilzuschnitt so konfektioniert und in der Kavität der Gießform ausgerichtet, dass die zugtragenden Fasern in Umfangsrichtung und orthogonal zur Längsachse der Gießform verlaufen. Die in dieser Richtung ausgerichteten Fäden oder Fasern weisen dabei zweckmäßiger Weise eine höhere Zug- und Biegewechselfestigkeit auf als die Fäden oder Fasern, die achsparallel zur Längsachse der Gießform ausgerichtet sind. Die Fäden bzw. Fasern in axialer Richtung müssen nur die im Herstellprozess auftretenden Kräfte einmalig aufnehmen und können entsprechend schwächer ausgeführt sein.

Wie oben bereits erwähnt, muss es sich bei dem Textilzuschnitt nicht im strengen textiltechnischen Sinn um ein Gewebe handeln, das aus miteinander durch eine geeignete Webtechnik verwobenen Kett- und Schussfäden gebildet ist. Vielmehr können die jeweils winklig zueinander angeordneten Fasern oder Fäden des Gewebzuschnitts nach Art eines Geleges an ihren Kreuzungspunkten auch miteinander verklebt, verschweißt oder vernäht sein.

In bestimmten Anwendungsfällen kann es vorteilhaft sein, die Kett- und/oder Schussfäden des Zugträger-Textilzuschnitts bezogen auf die Längsachse des Formkerns oder der Außenform auch unter einem Winkel anzuordnen, der >0° und <90° ist. Durch eine entsprechend diagonale Ausrichtung oder Gestaltung des Textils kann die Elastizität des Riemens gezielt beeinflusst werden. Beispielsweise kann durch die Anordnung der Textilfäden unter einem Winkel von 45° dem herzustellenden Zahnriemen gezielt eine hohe Elastizität in seiner Längsrichtung verliehen werden. Beeinflusst werden kann dies zudem dadurch, dass das Webmuster des Textilzuschnitts so angepasst ist, dass es in Belastungsrichtung eine gewisse Elastizität aufweist, oder durch den Abstand der Fäden oder Fasern.

Grundsätzlich kann somit die Steifigkeit und damit das Dehnungsverhalten des herzustellenden Treibriemens durch die verwendeten Zugträgermaterialien, das Webmuster und die Anordnung / Ausrichtung des Musters im Riemen gesteuert werden.

Das erfindungsgemäß für die Treibriemenherstellung verwendete, auf die am Riemen abzubildende Geometrie, insbesondere Zahngeometrie, aufgelegte Textillage bildende Textil kann aus Polyamid (Nylon) oder einem alternativen Material bestehen. Dabei kann das jeweilige Textil optional Komponenten, wie Teflon-Fäden, enthalten, die im Gebrauch die Reibung reduzieren.

Das die Textillage bildende Textil oder im Fall, dass ein Zugträger-Textilzuschnitt zum Einsatz kommt, dieser Textilzuschnitt können eine Kennzeichnungseinrichtung umfassen, die beim Einsatz des fertig hergestellten Zahnriemens als passives Element den Treibriemen eindeutig identifiziert und / oder als aktives Element mindestens eine Eigenschaft oder mindestens einen Zustand des Riemens erfasst und an eine Signalerfassungseinrichtung sendet.

Neben dem Zugträger und/oder dem Textil können beim erfindungsgemäßen Verfahren weitere Ausstattungselemente in den herzustellenden Treibriemen eingebracht werden. So ist es beispielsweise möglich, in den Riemen eine Kennzeichnungseinrichtung einzubringen, die eine eindeutige Identifikation des jeweiligen Treibriemens erlaubt. Diese Kennzeichnungseinrichtung kann als aktives Element ausgebildet sein, das bestimmte Eigenschaften des Riemens erfasst und an eine Signalerfassungseinrichtung meldet. Diese ist dann wiederum mit einer Auswerteinrichtung verbunden, welche anhand der erfassten Daten Aussagen über Zustand, Lebenserwartung etc. des so überwachten Zahnriemens erstellt. Ein entsprechend ausgebildeter Riemenantrieb und ein Verfahren zur Überwachung eines solchen Antriebs sind in der deutschen Patentanmeldung 10 2015 107 177.0 vom 7. Mai 2015 beschrieben, deren Inhalt hiermit in die vorliegende Anmeldung einbezogen wird.

Aktive Sender zur Signalübertragung, beispielsweise so genannte "RFID's", sowie zum Erfassen der jeweiligen Eigenschaftsgröße verwendete Sensoren benötigen für ihren Betrieb regelmäßig eine Energieversorgung. Zu diesem Zweck kann in an sich bekannter Weise in den erfindungsgemäß erzeugten Treibriemen eine Energieerzeugungseinheit, wie beispielsweise ein Piezoelement, eingearbeitet werden, die beispielsweise aus der Verformung, die der Treibriemen im Gebrauch ausgesetzt ist, elektrische Energie erzeugt oder durch Fremderregung, beispielsweise durch Induktion eines elektrischen Feldes, durch Ultraschall oder desgleichen, elektrische Energie erzeugt. Die Energieversorgungseinrichtung muss dann mit der jeweiligen aktiven Komponente elektrisch leitend verbunden sein.

Ebenso können die verschiedenen optional in dem erfindungsgemäß hergestellten Treibriemen vorgesehenen Komponenten miteinander verdrahtet oder einzelne dieser Komponenten mit einer Verdrahtung versehen werden. Diese Verdrahtung kann beispielsweise auch als Antenne zum Senden oder Empfangen von Signalen genutzt werden.

Für diese Verdrahtungsanwendungen können in den erfindungsgemäß in einem erfindungsgemäß erzeugten Treibriemen eingearbeiteten Textil (zahnseitige, außen an dem Treibriemen liegende Textillage, Zugträger, Zugträger-Textilzuschnitt) elektrisch leitfähige Drähte mit eingearbeitet sein. Diese leitfähigen Materialien können zur Übertragung von Signalen und Energie, aber auch als Messaufnehmer selbst eingesetzt werden. Drähte können in das Textil derart eingearbeitet werden, dass bei Überschreiten einer definierten Grenzdehnung von z.B. 0,1% der jeweilige Draht zerstört wird. Wird durch diesen Draht ein Strom geleitet, so fällt das Signal bei Drahtbruch aus. Der Ausfall des Signals wird erfasst und ist ein Maß für das Überschreiten der vorgesehenen Grenzdehnung. Dies kann als Signal dafür gewertet werden, dass der Riemen im Gebrauch übermäßig belastet worden ist und daher ausgetauscht werden muss. Mit der Dehnung ändert sich auch der elektrische Widerstand der Leitungen. Somit kann über eine Erfassung der Widerstände auf vorhandene Dehnungen und auf die anliegende Kraft geschlossen werden.

Auch Heizdrähte oder großflächigere Heiztextilabschnitte können in das Textil für die erfindungsgemäße zahnseitig vorgesehene Textillage oder den optional vorgesehenen Zugträger-Textilzuschnitt einbezogen werden. Mit der durch diese Heizdrähte oder Heiztextilabschnitte gebildeten Heizeinrichtung kann der Zahnriemen unabhängig von der Umgebungstemperatur bei einer definierten Mindesttemperatur gehalten werden. Dies kann zweckmäßig sein, wenn der Riemen bei tiefen Temperaturen eingesetzt werden soll, um auch bei diesen Temperaturen ein optimales Betriebsverhalten bei ausreichender Dauerbelastbarkeit zu gewährleisten.

Als Basismaterial kommt für die erfindungsgemäßen Zwecke ein Elastomer zum Einsatz, bei dem es sich um ein Polyurethan- (Duroplast oder Thermoplast), Kautschuk-, Silikon- oder ein sonstiges für die Verwendung als Basismaterial für die Treibriemenherstellung geeignetes und für das Spritzgießen verwendbares Material handeln kann. Selbstverständlich können auch Mischungen oder Kombinationen dieser Materialien zum Einsatz kommen.

Denkbar ist es auch, im Arbeitsschritt g) in eine erste Zone der Kavität ein erstes Basismaterial und in eine zweite Zone der Kavität ein zweites Basismaterial einzubringen, das sich beim fertig hergestellten Treibriemen in mindestens einer mechanischen Eigenschaft vom ersten Basismaterial unterscheidet. In diesem Fall werden also unterschiedliche Basiswerkstoffe an unterschiedlichen Zonen des Treibriemens eingebracht, um in den betreffenden Zonen voneinander unterschiedliche Eigenschaften zu erzielen.

So kann es im Fall der Herstellung eines Zahnriemens beispielsweise zweckmäßig sein, die Zähne des Zahnriemens aus einem vergleichbar harten, widerstandsfähigen Basiswerkstoff und den die Zähne tragenden Riemenrücken aus einem elastischeren Werkstoff zu formen, der eine große Biegewechselzahl des Riemenrückens erlaubt.

Genauso kann der Werkstoff des Riemenrückens auch so ausgelegt werden, dass er an seiner freien Oberseite einen vergleichbar hohen Reibungswiderstand bietet und so Mitnahmeeigenschaften hat, wie sie beispielsweise bei Flachriemen typischerweise anzutreffen sind. Alternativ ist es genauso möglich, auch den Riemenrücken aus einem hoch belastbaren, vergleichbar steifen Material herzustellen und ihn an seiner freien Oberseite optional zu profilieren. Hierdurch kann der Riemenrücken auch zur Kraftübertragung - gleich in welcher Form - genutzt werden. Ebenso denkbar ist es, den Riemenrücken mehrschichtig aus unterschiedlichen Materialien zu fertigen, um auch hier eine optimierte, den jeweiligen Anforderungen angepasste Eigenschaftsverteilung zu erzielen.

Grundsätzlich ist das Spritzgießergebnis schwerkraftunabhängig, so dass das Werkzeug in beliebiger Lage horizontal oder vertikal ausgerichtet sein kann.

Abhängig vom Füllverhalten des Basiswerkstoffs kann es zweckmäßig sein, das Anspritzen von einer oder beiden Stirnseiten der Werkzeugkavität, von der dem Riemenrücken zugeordneten Außenseite der Werkzeugkavität und / oder von der gegenüberliegenden Innenseite des herzustellenden Treibriemens her durchzuführen.

Ähnlich wie bei der Zugträgerlage besteht auch bei dem der abzubildenden Geometrie zugeordneten Textil während des Einbringens des Basismaterials in die Kavität der Gießform grundsätzlich die Gefahr eines Verrutschens. Es kann daher vorteilhaft sein, das Textil der Textillage vor dem Einspritzen des Basismaterials in die Kavität in den den Stirnseiten des Formkerns zugeordneten Bereichen der Gießform zu fixieren. Insbesondere bei der Produktion in Verbindung mit einem in einer Verzahnung der Form erzeugten Vakuum, ist es ebenfalls hilfreich, zumindest den mit der Zahngeometrie versehenen Bereich gegenüber der Umgebung abzudichten, damit auf der Vakuumseite möglichst wenig Fremdluft durch oder um das Textil herum gezogen wird. Hierzu können im Bereich der Stirnseiten der Gießform Dicht-oder Klemmelemente vorgesehen sein, mit dem die jeweils erforderliche Abdichtung oder das jeweils erforderliche Halten der jeweiligen Textillage bewerkstelligt werden kann.

Um die Werkzeugkosten zu optimieren sind verschiedene Varianten von für die erfindungsgemäßen Zwecke geeigneten Spritzguss-Werkzeugen möglich.

Abhängig vom Schwindungsverhalten der jeweils verwendeten Basismaterialien können für identische Riemenformen unterschiedlich dimensionierte Werkzeuge erforderlich sein. Denkbar ist es jedoch auch, das von Basismaterial zu Basismaterial gegebene, unterschiedliche Schwindungsverhalten über eine gezielte Steuerung der Prozessparameter, wie "Einspritzdruck", "Einspritztemperatur", "Ausgestaltung, Anzahl oder Anordnung der Einspritzöffnungen in der Gießform", "Ausrichtung des in die Kavität einströmenden Materialstroms", "Fließgeschwindigkeit des Materialstroms", "Dauer des Nachdrucks" oder "Höhe des Nachdrucks", auch so zu steuern, dass trotz des jeweils unterschiedlichen Verarbeitungsverhaltens eine einzige Form für unterschiedliche Materialien verwendet werden kann. Indem eine geeignete Steuereinrichtung vorgesehen wird, kann für jeden Riemen und Basismaterialtyp die geeigneten Prozessparameter in der Steuerung hinterlegt werden.

Mit der Erfindung gelingt es, Treibriemen herzustellen, die einen Grundkörper, der einen mit einer bestimmten Geometrie versehenen Abschnitt umfasst, der im Gebrauch mit einem anderen Bauteil in Kontakt kommt, eine Textillage, mit der die Geometrie an mindestens einer Seite belegt ist, sowie optional einen im Grundkörper eingebetteten Zugträger umfasst und dabei erfindungsgemäß dadurch gekennzeichnet ist, dass die Textillage im fabrikneuen Zustand des Treibriemens im Bereich der am Treibriemen jeweils abgebildeten Geometrie zur Umgebung hin frei liegt und an ihrer dem Grundkörper zugewandten Seite unmittelbar an das Basismaterial des Grundkörpers angebunden ist.

Dabei sind im Fall erfindungsgemäß erzeugter Zahnriemen jeweils die Zahngründe zwischen den zueinander benachbarten Zähnen des Treibriemens kerbfrei, d.h. ohne eine beispielsweise in Folge der beim Stand der Technik unvermeidbaren Wickelnasen in den Zahngrund eingeformten, quer zur Längserstreckung des Riemens ausgerichteten Rille, ausgebildet. Dies gilt auch für solche Zahnriemen, bei denen der Zugträger im Bereich des Zahngrunds der am Zahnriemen ausgebildeten Zahngeometrie unmittelbar an der textilen Lage anliegt.

Die Erfindung betrifft somit Verfahren zum Herstellen von Treibriemen aus unterschiedlichen Materialien mittels Gießverfahren. Dazu werden ein Formkern und eine Außenform eines Gießwerkzeugs bereitgestellt. Die Umfangsfläche des Formkerns oder die Innenumfangsfläche der Außenform ist mit einer am Treibriemen abzubildenden Geometrie versehen. Auf die Geometrie wird eine Textillage gelegt. Der Formkern wird in die Außenform gesetzt, so dass der Formkern und die Außenform zwischen sich eine Kavität begrenzen. Optional kann ein Zugträgers in der Kavität angeordnet und die Kavität zumindest im Bereich der am Treibriemen abzubildenden Geometrie gegenüber der Umgebung abgedichtet werden. Die Textillage wird an die die Geometrie begrenzenden Flächen angelegt und ein Elastomer-Basismaterial in die Kavität eingebracht. Optional wird das Basismaterial nach der Füllung der Kavität Flächen nachgedrückt und der auf das Basismaterial wirkende Druck aufrechterhalten, bis das Basismaterial fest ist. Der erhalten Riemenwickel wird entformt und der Zahnriemen optional abgeteilt.

Nachfolgend wird die Erfindung anhand einer ein Ausführungsbeispiel darstellenden Zeichnung näher erläutert. Es zeigen jeweils schematisch:

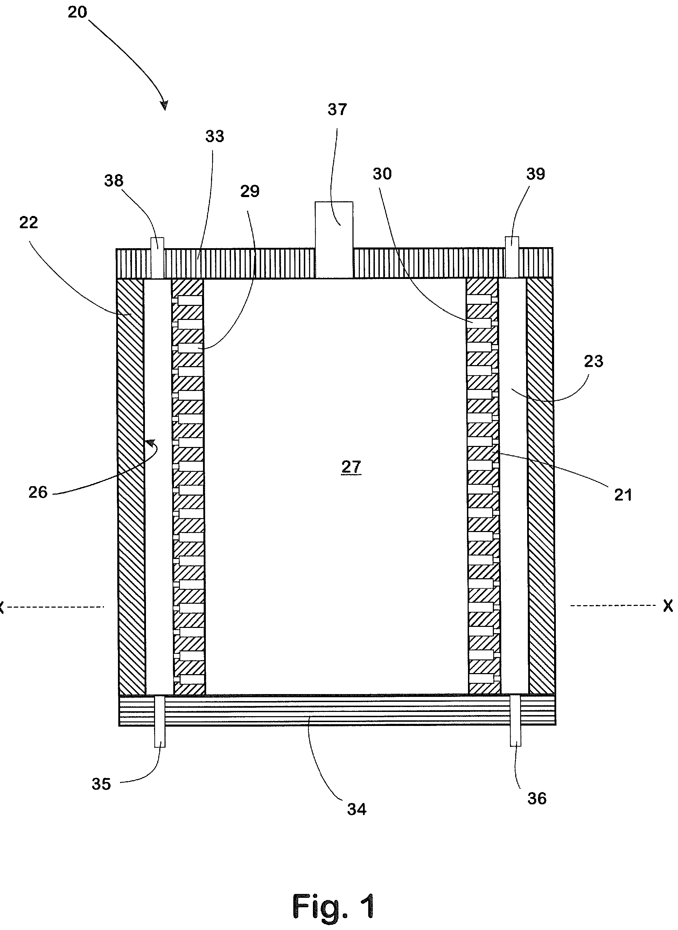

- Fig. 1: ein Gießwerkzeug im Längsschnitt,
- Fig. 2: das Werkzeug gemäß Fig. 1 in einem Schnitt entlang der in Fig. 1 eingetragenen Schnittlinie X-X und
- Fig. 3: einen Ausschnitt A von Fig. 2;
- Fig. 4a: einen ersten Zugträger-Gewebezuschnitt;
- Fig. 4b: den Gewebezuschnitt gemäß Fig. 4a in an den Kern des Gießwerkzeugs angelegten Zustand;
- Fig. 5a: einen zweiten Zugträger-Gewebezuschnitt;
- Fig. 5b: den Gewebezuschnitt gemäß Fig. 5a in an den Kern des Gießwerkzeugs angelegten Zustand;
- Fig. 6a: einen dritten Zugträger-Gewebezuschnitt;
- Fig. 6b: den Gewebezuschnitt gemäß Fig. 6a in an den Kern des Gießwerkzeugs angelegten Zustand;

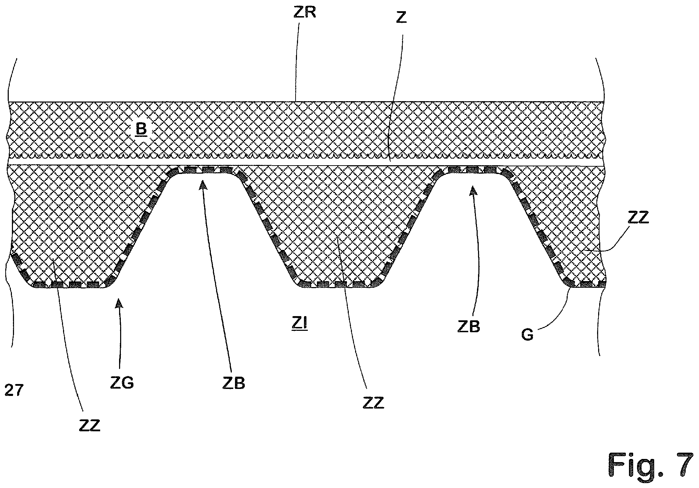

- Fig. 7: einen Ausschnitt eines erfindungsgemäß erzeugten Zahnriemens in einem Längsschnitt.

Das Spritzgießwerkzeug 20 weist einen rohrförmigen Kern 21 und eine Außenschale 22 auf, wobei der Kern 21 an seinem der Kavität 23 des Werkzeugs 20 zugeordneten Umfang 24 eine die "Zahngeometrie" des Kerns 21 bildende Verzahnung 25 trägt und die der Kavität zugeordneten 23 Innenfläche 26 der Außenschale 22 eben ausgebildet ist.

Der Kern 21 umgibt eine zentrale Evakuierungsleitung 27. Eine große Zahl von Absaugleitungen 29,30 sind durch die Wandung des Kerns 21 von der zentralen Evakuierungsleitung 27 zum Umfang des Kerns 21 geführt.

Die Absaugleitungen 29,30 münden jeweils an der Umfangsfläche 24 des Kerns 21 in den Zahngründen der dort vorgesehenen Zahngeometrie und sind dabei so verteilt, dass an der Umfangsfläche 24 ein gleichmäßig verteilter Unterdruck entsteht, wenn über die zentrale Evakuierungsleitung 27 die in der Kavität 23 vorhandene Atmosphäre (Luft) abgesaugt wird.

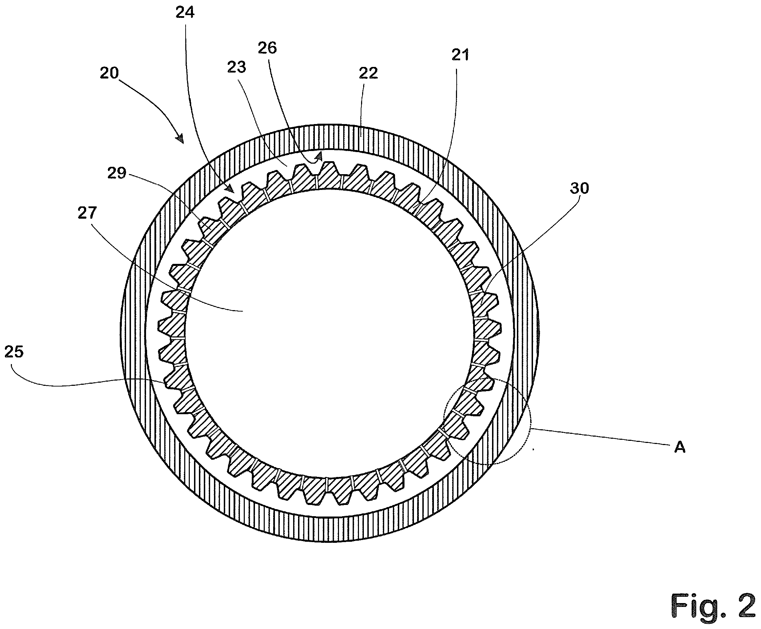

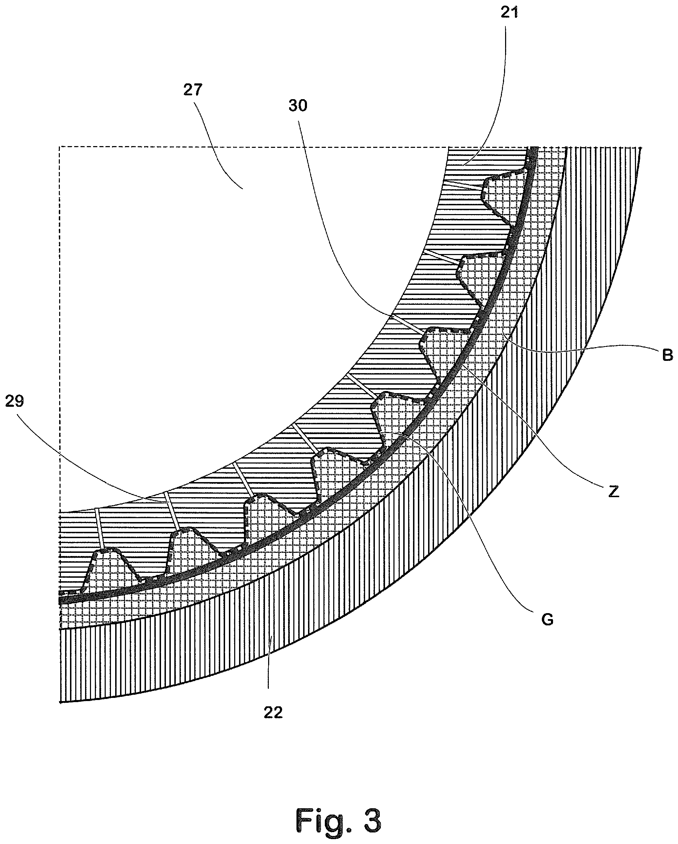

Für die Herstellung eines Zahnriemen-Wickels, aus dem später eine größere Zahl von Zahnriemen abgeteilt werden können, wird in das Werkzeug 20 eine textile, als Gewebe ausgebildete Lage G und eine Zugträgerlage Z eingelegt (Fig. 2, 3).

Die textile Lage G wird dabei so angeordnet, dass sie sich zwischen der Verzahnung 25 und der Zugträgerlage Z befindet. Die Länge der textilen Lage G ist unter Berücksichtigung ihrer Elastizität so bemessen, dass sie der Länge der Konturlinie der Verzahnung 25 entspricht, die textile Lage G also so an die verzahnte Umfangsfläche 24 des Kerns 21 angelegt werden kann, dass sie die Umfangsfläche 24 des Kerns 21 falten- und im Wesentlichen spannungsfrei bedecken kann.

Die textile Lage G ist mit einer Beschichtung aus einem Werkstoff versehen, der artverwandt mit dem Basiswerkstoff B ist, aus dem der Grundkörper des herzustellenden Treibriemens gefertigt werden soll. Handelt es sich beispielsweise bei dem Basiswerkstoff B um einen PU-Werkstoff, so besteht zweckmäßigerweise auch die Beschichtung der Textillage G aus einem PU-Werkstoff. Auf diese Weise reagiert beim Einbringen des Basiswerkstoffs B in die Kavität 23 der Basiswerkstoff B mit dem Beschichtungswerkstoff der Textillage G und es entsteht eine intensive stoffschlüssige Anbindung zwischen dem aus dem Basiswerkstoff B gebildeten Grundkörper und der Textillage G des Treibriemens. Die Beschichtung der Textillage G kann dabei dadurch erfolgen, dass die einzelnen Fasern, aus denen die Textillage G besteht, mit der Beschichtung versehen sind oder die Textillage G insgesamt mit einer Beschichtung versehen ist. Im letzteren Fall wird die Beschichtung optimalerweise so ausgeführt, dass die Textillage G möglichst gasdicht ist, um das Anlegen an die am Treibriemen abzubildende Geometrie (Verzahnung 25) zu unterstützen.

Wie in Fig. 3 dargestellt, ist bei der hier erläuterten Ausgestaltung die Zugträgerlage Z über die textile Lage G auf den Zahnstirnflächen der Verzahnung 25 ("Zahngeometrie") abgestützt, so dass keine weiteren Haltemittel zum Positionieren der textilen Lage G in der Kavität 23 benötigt werden.

Soll jedoch die Zugträgerlage Z im freien Raum zwischen der Verzahnung 25 und der Innenfläche 26 der Außenschale 22 positioniert werden, können dazu hier nicht dargestellte Halteelemente eingesetzt werden. Mittels dieser Halteelemente kann die Zugträgerlage Z so in der Kavität 23 gehalten werden, dass ihre Lage der Solllage im herzustellenden Zahnriemen-Wickel entspricht.

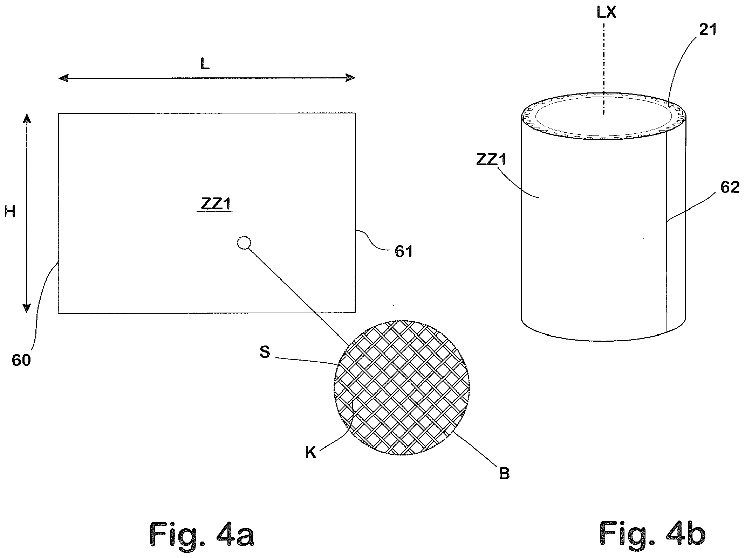

Bei der Zugträgerlage Z handelt es sich beispielsweise um einen Wickel, der durch Wickeln von einzelnen Zugträgerfasern oder Zugträgerfasersträngen gebildet ist. Alternativ kann es sich bei der Zugträgerlage Z um einen Gewebezuschnitt ZZ1 - ZZ3 handeln, wie er weiter unten im Zusammenhang mit den Figuren 4a - 6d erläutert wird.

Nach dem Positionieren des Zugträgers Z und des Textils G wird die Kavität 23 mittels eines Deckels 33 verschlossen, der auch die zentrale Evakuierungsleitung 27 abdeckt und eine zentrale Absaugöffnung 37 aufweist, über die die Evakuierungsleitung 27 und damit über die Absaugleitungen 29,30 die Kavität 23 evakuiert werden kann. Zu diesem Zweck ist an die Absaugöffnung eine hier nicht gezeigte Evakuierungseinrichtung angeschlossen.

Auf der zum Deckel 33 gegenüberliegenden Seite sitzen der Formkern 21 und die Außenschale 22 auf einem Boden 34, der die Kavität 23 und die zentrale Evakuierungsleitung 27 an dieser Seite abdichtet. Durch den Boden 34 sind Einspritzdüsen 35,36 geführt, mit denen Basismaterial B in die Kavität 23 injiziert werden kann.

Um ein Verrutschen der textilen Lage G während des Einspritzens des Basismaterials in die Kavität an der Verzahnung 25 des Kerns 21 zu verhindern, kann die textile Lage G im Bereich der Stirnseiten des Kerns 21 fixiert werden.

Wird nun die Kavität 23 über die zentrale Evakuierungsleitung 27 evakuiert, wird die textile Lage G an die vorgegebene Zahnkontur der Verzahnung 25 angesaugt, so dass das Textil G die vorgegebene Zahnform annimmt (Fig. 3). Das Textil G wird dabei durch das Vakuum gehalten und vorgedehnt, so dass es sich an die Zahngeometrie des Formkerns 21 anlegt.

Erst dann beginnt der eigentliche Gießprozess. Hierbei wird eine erste Charge des Basismaterials B über dem Boden 34 des Werkzeugs in die Kavität 23 eingespritzt und zwar derart, dass die Zugträgerlage Z von dem eingespritzten Basismaterial B getragen ist. In der Kavität 23 noch vorhandene, vom Basismaterial B verdrängte Luft kann dabei über gesonderte Luftauslässe 38, 39 entweichen.

Im Fall, dass Halteelemente zum Positionieren der textilen Lage G eingesetzt worden sind, werden diese nun aus der Kavität 23 gezogen und erforderlichenfalls eine weitere Charge des Basismaterials B in die Kavität 23 gespritzt.

Ist die Kavität 23 derart vollständig gefüllt, werden die Luftauslässe 38,39 verschlossen. Optional kann nun eine kurze Druckerhöhung bewirkt werden. Das mit erhöhtem Überdruck injizierte ("nachgedrückte") Basismaterial B sorgt für die vollständige Ausformung der Verzahnung mit Textil G und Basismaterial B. Die zwischen Textil G und der Zahngeometrie gegebenenfalls noch vorhandene Luft kann dabei über die Absaugleitungen 29,30 entweichen. Die Anlage der textilen Lage G an den ihr zugeordneten Flächen der Verzahnung 25 wird so perfektioniert und die Füllung der Kavität 23 ebenso optimiert.

Wie oben bereits erwähnt, kann der Zugträger Z auch als Gewebezuschnitt bereitgestellt und in der Kavität 23 des Gießwerkzeugs 20 angeordnet werden. Der Zugträger-Gewebezuschnitt kann dabei als Schlauchgebilde ausgebildet sein oder, wie in den Figuren 4a - 6d gezeigt, als aus einem Flächengewebe bereitgestellter Zuschnitt ZZ1, ZZ2, ZZ3 verarbeitet werden.

Bei der in Fig. 4a,4b dargestellten Variante weist der Zugträger-Gewebezuschnitt ZZ1 eine rechteckige Form auf, deren Höhe H der Höhe des Kerns 21 und deren Länge L der Umfangslänge des durch die Zahnstirnflächen der an dem Kern 21 vorgesehenen Verzahnung 25 und der darauf liegenden textilen Lage G definierten maximalen Kreisdurchmessers des Kerns 21 entspricht. Der Gewebezuschnitt ZZ1 kann dementsprechend so um den Kern 21 gelegt werden, dass er einerseits dicht an den auf den Zahnstirnflächen der Verzahnung 25 aufliegenden Abschnitten der textilen Lage G aufliegt und andererseits mit seinen seine Längsseiten verbindenden Kanten 60,61 auf Stoß gefügt ist. Die Fügelinie 62 ist dabei achsparallel zur Längsachse LX des Kerns 21 ausgerichtet.

Wie Ausschnitt B von Fig. 4a in einer Vergrößerung zeigt, können die Fäden bzw. Fasern des Gewebezuschnitts in Bezug auf die Längsachse LX unter einem Winkel von beispielsweise 45° ausgerichtet sein, um dem Zugträger-Gewebezuschnitt ZZ1 eine bestimmte Dehnbarkeit in Umfangsrichtung U des Kerns 21 und damit einhergehend dem herzustellenden Zahnriemen eine entsprechende Dehnbarkeit zu verleihen. Dabei bestehen die auf den Zahnriemen lastenden Zugkräfte aufnehmenden Schussfäden S des Gewebezuschnitts ZZ1 aus einer Hochleistungsfaser, wie Aramid, wogegen die Kettfäden K des Gewebezuschnitts ZZ1, die lediglich die Position der Schussfäden S sichern, aus vergleichbar schwachen Polyesterfasern gebildet sind.

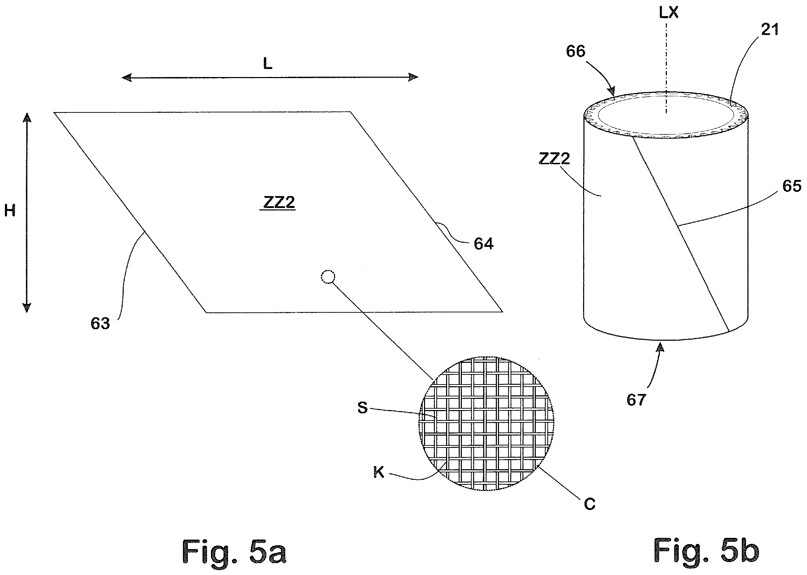

Bei der in Fig. 5a,5b gezeigten Variante weist der Zugträger-Gewebezuschnitt ZZ2 die Form eines schiefen Parallelogramms auf, dessen Höhe H der Höhe des Kerns 21 und dessen Länge L wiederum der Umfangslänge des durch die Zahnstirnflächen der an dem Kern 21 vorgesehenen Verzahnung 25 und der darauf liegenden textilen Lage G definierten maximalen Kreisdurchmessers des Kerns 21 entspricht. Auch der Gewebezuschnitt ZZ2 kann dementsprechend so um den Kern 21 gelegt werden, dass er einerseits dicht auf den Zahnstirnflächen der Verzahnung 25 aufliegenden Abschnitten der textilen Lage G aufliegt und andererseits mit seinen seine Längsseiten verbindenden Kanten 63,64 auf Stoß gefügt ist. Die Fügelinie 65 verläuft in diesem Fall in einer bezogen auf die Längsachse LX des Kerns 21 schräg ausgerichteten Geraden von der oberen 66 zur unteren Stirnseite 67 des Kerns 21.

Wie Ausschnitt C von Fig. 5b in einer Vergrößerung zeigt, sind bei dem Zuschnitt ZZ2 die Fäden bzw. Fasern in Bezug auf die Längsachse LX unter einem Winkel von 0° bzw. 90° ausgerichtet sein, um dem Zugträger-Gewebezuschnitt ZZ2 eine maximale Zugfestigkeit zu verleihen.

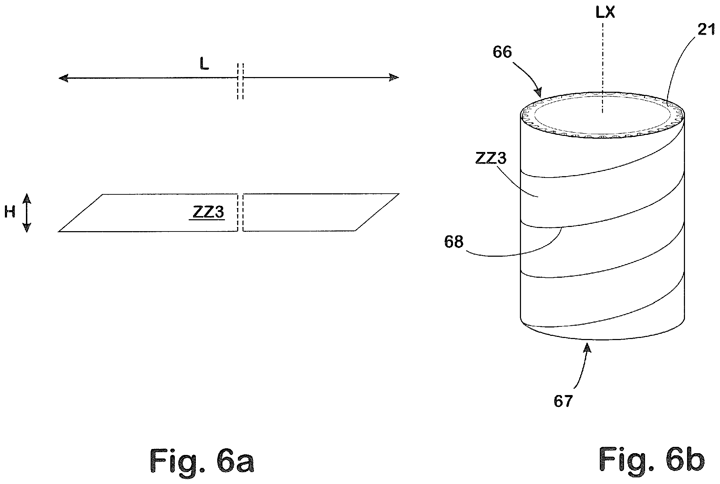

Bei der in Fig. 6a,6b gezeigten Variante weist der hier bandförmig ausgebildete Zugträger-Gewebezuschnitt ZZ3 ebenfalls die Form eines schiefen Parallelogramms auf. Seine Höhe H entspricht jedoch beispielsweise nur einem Bruchteil, beispielsweise einem Fünftel, der Höhe des Kerns 21. Seine Länge L ist gleichzeitig so bemessen, dass der Gewebezuschnitt ZZ3 ausgehend von dem der unteren Stirnseite 67 zugeordneten Rand des Kerns 21 mehrfach spiralförmig um die auf dem Kern 21 liegende textile Lage G gewunden werden kann, bis er am der oberen Stirnseite 66 zugeordneten Rand des Kerns 21 endet. Dabei stoßen die Längskanten des Gewebezuschnitts ZZ3 in einer spiralförmig um den Kern 21 umlaufenden Fügelinie 68 dicht aneinander und sind ebenfalls schräg in Bezug auf die Längsachse LX des Kerns 21 ausgerichtet.

Die Verbindung zwischen den jeweils in den Fügelinien 62,65 und 68 gegeneinander stoßenden Kanten der jeweils um den Kern 21 gelegten Zugträger-Gewebezuschnitte ZZ1, ZZ2, ZZ3 erfolgt beispielsweise durch Verschweißen mittels eines Lasers.

Im Ergebnis wird mit der Erfindung ein Zahnriemen-Wickel erhalten, der eine optimale, von unerwünschten Einkerbungen und desgleichen freie Oberflächenbeschaffenheit bei gleichzeitig optimaler Eigenschaftsverteilung besitzt.

Von dem erhaltenen Zahnriemen-Wickel werden in an sich bekannter Weise Zahnriemen ZR abgeteilt, deren Breite den jeweiligen kundenseitigen Anforderungen entspricht.

Erfindungsgemäß erzeugte Zahnriemen ZR zeichnen sich dabei dadurch aus, dass bei ihnen im Neuzustand die textile Lage G frei, d.h. weder von einer Hilfsfolie von Basiswerkstoff bedeckt, an der mit der Zahngeometrie ZG versehenen Innenseite ZI des Zahnriemens ZR angeordnet ist. Dabei ist der jeweils zwischen den benachbarten Zähnen ZZ der Zahngeometrie ZG vorhandene Zahngrund ZB gleichmäßig und kerbfrei ausgebildet, obwohl hier der Zugträger Z direkt auf der textilen Lage G liegt.

### BEZUGSZEICHEN

- 20: Spritzgießwerkzeug
- 21: rohrförmiger Kern (Formkern)
- 22: Außenschale (Außenform)
- 23: Kavität des Werkzeugs 20 (Umfangsfläche)
- 24: Zahngeometrie des Kerns 21
- 25: die Zahngeometrie bildende Verzahnung 25
- 26: Innenfläche der Außenschale 22
- 27: zentrale Evakuierungsleitung
- 29,30: Absaugleitungen
- 33: Deckel
- 34: Boden
- 35,36: Einspritzdüsen
- 37: zentrale Absaugöffnung
- 38,39: Luftauslässe
- 60,61: Kanten des Zugträger-Gewebezuschnitts ZZ1
- 62: Fügelinie
- 63,64: Kanten des Zugträger-Gewebezuschnitts ZZ2
- 65: Fügelinie
- 66: obere Stirnseite des Kerns 21
- 67: untere Stirnseite des Kerns 21
- 68: Fügelinie

- B: Basismaterial
- G: textile Lage
- H: Höhe der Zugträger-Gewebezuschnitte ZZ1 - ZZ3
- K: Kettfäden
- L: Länge der Zugträger-Gewebezuschnitte ZZ1 - ZZ3
- LX: Längsachse des Kerns 21
- S: Schussfäden
- Z: Zugträgerlage
- ZZ1 - ZZ3: Zugträger-Gewebezuschnitte

- ZR: Zahnriemen
- ZG: Zahngeometrie
- ZZ: Zähne
- ZB: Zahngrund

## Patentansprüche

1. Verfahren zur Herstellung eines Treibriemens (ZR), umfassend folgende Arbeitsschritte:
a) Bereitstellen eines Formkerns (21) und einer Außenform (22) eines Gießwerkzeugs (20), wobei der Formkern (21) dazu vorgesehen ist, in die Außenform (22) eingesetzt zu werden, so dass zwischen der Außenform (22) und dem in ihr sitzenden Formkern (21) eine die Form des herzustellenden Treibriemens (ZR) abbildende Kavität (23) gebildet ist, und wobei die der Kavität (23) zugeordnete Umfangsfläche des Formkerns (21) oder die der Kavität (23) zugeordnete Innenumfangsfläche (26) der Außenform (22) mit einer am Treibriemen (ZR) abzubildenden Geometrie (24) versehen ist, die durch Vertiefungen oder Erhebungen gebildet ist, die durch aufeinander stoßende Flächen begrenzt sind, welche in die Umfangsfläche des Formkerns (21) oder die Innenumfangsfläche (26) der Außenform (22) eingeformt oder an die Umfangsfläche des Formkerns (21) oder die Innenumfangsfläche (26) der Außenform (22) angeformt sind;
b) Auflegen einer Textillage (G) auf die am Treibriemen (ZR) abzubildende Geometrie (24);
c) Einsetzen des Formkerns (21) in die Außenform (22), so dass der Formkern (21) und die Außenform (22) zwischen sich die Kavität (23) umgrenzen;
d) optional: Anordnen eines Zugträgers (Z,ZZ1,ZZ2,ZZ3) in der Kavität (23);
e) optional: Verschließen der Kavität (23) zumindest im Bereich der am Treibriemen (ZR) abzubildenden Geometrie (24) gegenüber der Umgebung;
f) Anlegen der Textillage (G) an die Flächen, die am Formkern oder an der Außenform die am Treibriemen (ZR) abzubildende Geometrie (24) begrenzen, wobei das Anlegen der Textillage (G) an die Geometrie durch Erzeugen eines Unterdrucks im Bereich der Freiräume unterstützt wird, die nach dem Arbeitsschritt b) zwischen der Textillage (G) und der Geometrie (24) vorhanden sind;
g) Einbringen eines gießfähigen Elastomer-Basismaterials in die Kavität (23), wobei das in die Kavität eindringende Basismaterial gegen die an der abzubildenden Geometrie anliegende Textillage drückt und der Unterdruck nach wie vor aufrechterhalten wird;
h) optional: Nachdrücken von Basismaterial nach der vollständigen Füllung der Kavität (23) mit dem Basismaterial, um eine Druckerhöhung in der Kavität (23) zu bewirken;
i) optional: Aufrechterhalten des auf das Basismaterial wirkenden Drucks solange, bis das Basismaterial ausreichend fest geworden ist;
j) Entformen des erhaltenen Riemenwickels
k) optional: Abteilen des Treibriemens (ZR) von dem Riemenwickel.

2. Verfahren nach Anspruch 1, **dadurch gekennzeichnet, dass** die Geometrie (24) an der Umfangsfläche des Formkerns (21) ausgebildet ist.

3. Verfahren nach Anspruch 1, **dadurch gekennzeichnet, dass** die Geometrie (24) an der Innenumfangsfläche (26) der Außenform (22) ausgebildet ist.

4. Verfahren nach einem der voranstehenden Ansprüche, **dadurch gekennzeichnet, dass** das Textil der Textillage (G) mit einer gegenüber dem Basiswerkstoff (B) reaktionsfähigen Beschichtung versehen ist.

5. Verfahren nach einem der voranstehenden Ansprüche, **dadurch gekennzeichnet, dass** das Basismaterial mit einem Druck beaufschlagt in die Kavität (23) eingebracht wird.

6. Verfahren nach einem der voranstehenden Ansprüche, **dadurch gekennzeichnet, dass** mindestens der Formkern (21) oder die Außenform (22) erwärmt werden.

7. Verfahren nach einem der voranstehenden Ansprüche, **dadurch gekennzeichnet, dass** im Arbeitsschritt g) in eine erste Zone der Kavität (23) ein erstes Basismaterial und in eine zweite Zone der Kavität (23) ein zweites Basismaterial eingebracht wird, das sich beim fertig hergestellten Treibriemen (ZR) in mindestens einer mechanischen Eigenschaft vom ersten Basismaterial unterscheidet.

8. Verfahren nach einem der voranstehenden Ansprüche, **dadurch gekennzeichnet, dass** zum Einbringen des Zugträgers (Z,ZZ1,ZZ2,ZZ3) in die Kavität (Arbeitsschritt d)) der Zugträger (Z,ZZ1,ZZ2,ZZ3) vor dem Einsetzen des Formkerns (21) in die Außenform (22) (Arbeitsschritt c)) um den Formkern (21) gelegt und gemeinsam mit dem Formkern (21) in die Außenform (22) gesetzt wird.

9. Verfahren nach einem der voranstehenden Ansprüche, **dadurch gekennzeichnet, dass** das gießfähige Elastomer-Basismaterial im Arbeitsschritt g) in die Kavität (23) eingespritzt wird, dass nach dem Einsetzen des Formkerns (21) in die Außenform (22) und vor dem Einspritzen des Basismaterials (B) ein Zugträger mittels beweglicher Hilfselemente in der Kavität (23) der Gießform mit Abstand zu der Textillage positioniert wird und dass die Hilfselemente nach einem Einspritzen einer ersten Portion des Basismaterials (B) schrittweise oder kontinuierlich unter Zurücklassen des Zugträgers (Z) in dem Basismaterial (B) aus der Kavität (23) hinausbewegt werden.

10. Verfahren nach einem der voranstehenden Ansprüche , **dadurch gekennzeichnet, dass** der herzustellende Treibriemen ein Zahnriemen (ZR) ist und **dass** die an der Umfangsfläche des Formkerns (21) oder an der der Kavität (23) zugeordneten Innenumfangsfläche (26) der Außenform (22) vorgesehene Geometrie eine am Zahnriemen (ZR) abzubildende Zahngeometrie (24) ist.

11. Verfahren nach einem der Ansprüche 9 oder 10, **dadurch gekennzeichnet, dass** im Arbeitsschritt d) ein Zugträger (Z,ZZ1,ZZ2,ZZ3) unmittelbar auf die zuvor auf die Geometrie aufgelegte Textillage (G) aufgelegt wird, so dass er über die textile Lage (G) auf den Zahnstirnflächen der Zahngeometrie (24) abgestützt ist.

12. Verfahren nach einem der voranstehenden Ansprüche, **dadurch gekennzeichnet, dass** der Zugträger als Textilzuschnitt (ZZ1,ZZ2,ZZ3) ausgebildet ist.

13. Verfahren nach Anspruch 12, **dadurch gekennzeichnet, dass** Fäden des Zugträger-Textilzuschnitts (ZZ1,ZZ2,ZZ3) bezogen auf die Längsachse (LX) des Formkerns (21) unter einem Winkel angeordnet sind, der >0° und <90° ist.

14. Verfahren nach einem der Ansprüche 12 oder 13, **dadurch gekennzeichnet, dass** der Zugträger-Textilzuschnitt schlauchartig ausgebildet ist.

15. Verfahren nach einem der Ansprüche 12 bis 14, **dadurch gekennzeichnet, dass** der Zugträger-Textilzuschnitt (ZZ1,ZZ2,ZZ3) bandförmig ausgebildet ist und in einer Windung oder mehreren Windungen an die Geometrie (24) angelegt wird.

16. Verfahren nach einem der voranstehenden Ansprüche, **dadurch gekennzeichnet, dass** das gießfähige Elastomer-Basismaterial im Arbeitsschritt g) in die Kavität (23) eingespritzt wird und **dass** die geometrieseitige Textillage (G) oder der Zugträger (ZZ1,ZZ2,ZZ3) vor dem Einspritzen des Basismaterials (B) in die Kavität (23) an den den Stirnseiten (66,67) des Formkerns (21) zugeordneten Bereichen der Gießform fixiert wird.

17. Verfahren nach einem der voranstehenden Ansprüche, **dadurch gekennzeichnet, dass** der Zugträger (Z,ZZ1,ZZ2,ZZ3) oder die Textileinlage (G) eine Kennzeichnungseinrichtung umfasst, die beim Einsatz des fertig hergestellten Treibriemens (ZR) als passives Element den Treibriemen (ZR) eindeutig identifiziert und / oder als aktives Element mindestens eine Eigenschaft oder mindestens einen Zustand des Treibriemens (ZR) erfasst und an eine Signalerfassungseinrichtung sendet.

## Claims

1. Method for producing a drive belt (ZR), comprising the following work steps:
a) providing a mould core (21) and an outer mould (22) of a casting tool (20), wherein the mould core (21) is provided to be inserted into the outer mould (22) such that a cavity (23) representing the shape of the drive belt (ZR) to be produced is formed between the outer mould (22) and the mould core (21) sitting therein, and wherein the circumferential surface of the mould core (21) assigned to the cavity (23) or the inner circumferential surface (26) of the outer mould (22) assigned to the cavity (23) is provided with a geometry (24) to be represented on the drive belt (ZR) which is formed by recesses or protrusions which are delimited by surfaces abutting one another which are formed into the circumferential surface of the mould core (21) or the inner circumferential surface (26) of the outer mould (22) or formed on the circumferential surface of the mould core (21) or the inner circumferential surface (26) of the outer mould (22);
b) placing a textile layer (G) on the geometry (24) to be represented on the drive belt (ZR);
c) inserting the mould core (21) into the outer mould (22) so that the mould core (21) and the outer mould (22) define the cavity (23) between them;
d) optionally: arranging a tension member (Z, ZZ1, ZZ2, ZZ3) in the cavity (23);
e) optionally: sealing the cavity (23) at least in the region of the geometry (24) to be represented on the drive belt (ZR) with respect to the environment;
f) applying the textile layer (G) on the surfaces which delimit the geometry (24) to be represented on the drive belt (ZR) on the mould core or on the outer mould, wherein applying the textile layer (G) on the geometry is supported by generating an underpressure in the region of the free spaces which are present between the textile layer (G) and the geometry (24) after work step b);
g) introducing a castable elastomer base material into the cavity (23), wherein the base material penetrating into the cavity presses against the textile layer abutting on the geometry to be represented and the underpressure is maintained as before;
h) optionally: pressing base material after completely filling the cavity (23) with the base material to effect a pressure increase in the cavity (23);
i) optionally: maintaining the pressure acting on the base material until the base material has become sufficiently hard;
j) demoulding the belt winding obtained
k) optionally: separating the drive belt (ZR) from the belt winding.

2. Method according to claim 1, **characterised in that** the geometry (24) is formed on the circumferential surface of the mould core (21).

3. Method according to claim 1, **characterised in that** the geometry (24) is formed on the inner circumferential surface (26) of the outer mould (22).

4. Method according to any one of the preceding claims, **characterised in that** the textile of the textile layer (G) is provided with a coating capable of reacting with the base material (B).

5. Method according to any one of the preceding claims, **characterised in that** the base material is introduced into the cavity (23) with a pressure applied.

6. Method according to any one of the preceding claims, **characterised in that** at least the mould core (21) or the outer mould (22) are heated.

7. Method according to any one of the preceding claims, **characterised in that** in work step g) a first base material is introduced into a first area of the cavity (23) and a second base material is introduced into a second area of the cavity (23) which is distinguished from the first base material in at least one mechanical property in the case of the completely produced drive belt (ZR).

8. Method according to any one of the preceding claims, **characterised in that** in order to introduce the tension member (Z, ZZ1, ZZ2, ZZ3) into the cavity (work step d)), the tension member (Z, ZZ1, ZZ2, ZZ3) is placed around the mould core (21) prior to inserting the mould core (21) into the outer mould (22) (work step c)) and is set together with the mould core (21) into the outer mould (22).

9. Method according to any one of the preceding claims, **characterised in that** the castable elastomer base material is injected into the cavity (23) in work step g), **in that** a tension member is positioned by means of movable auxiliary elements in the cavity (23) of the cast mould at a distance from the textile layer after inserting the mould core (21) into the outer mould (22) and prior to injecting the base material (B) and **in that** the auxiliary elements, after injecting a first portion of the base material (B), are moved out of the cavity (23) step by step or continuously leaving the tension member (Z) behind in the base material (B).

10. Method according to any one of the preceding claims, **characterised in that** the drive belt to be produced is a synchronous belt (ZR) and **in that** the geometry provided on the circumferential surface of the mould core (21) or on the inner circumferential surface (26) of the outer mould (22) assigned to the cavity (23) is a toothed geometry (24) to be represented on the synchronous belt (ZR).

11. Method according to any one of claims 9 or 10, **characterised in that** in work step d) a tension member (Z, ZZ1, ZZ2, ZZ3) is placed directly on the textile layer (G) previously placed on the geometry such that said tension member is supported via the textile layer (G) on the toothed end surfaces of the toothed geometry (24).

12. Method according to any one of the preceding claims, **characterised in that** the tension member is formed as a textile cut-out (ZZ1, ZZ2, ZZ3).

13. Method according to claim 12, **characterised in that** threads of the tension member textile cut-out (ZZ1, ZZ2, ZZ3) are arranged at an angle in relation to the longitudinal axis (LX) of the mould core (21) which is > 0° and < 90°.

14. Method according to any one of claims 12 or 13, **characterised in that** the tension member textile cut-out is formed in the manner of a hose.

15. Method according to any one of claims 12 to 14, **characterised in that** the tension member textile cut-out (ZZ1, ZZ2, ZZ3) is formed in the shape of a strip and is applied to the geometry (24) in one winding or a plurality of windings.

16. Method according to any one of the preceding claims, **characterised in that** the castable elastomer base material is injected into the cavity (23) in work step g) and **in that** the geometry-side textile layer (G) or the tension member (ZZ1, ZZ2, ZZ3) is fixed on the regions of the cast mould assigned to the end sides (66, 67) of the mould core (21) prior to injecting the base material (B) into the cavity (23).

17. Method according to any one of the preceding claims, **characterised in that** the tension member (Z, ZZ1, ZZ2, ZZ3) or the textile insert (G) comprises a labelling device which clearly identifies the drive belt (ZR) as a passive element when the completely produced drive belt (ZR) is used and/or as an active element detects at least one property or at least one state of the drive belt (ZR) and sends it to a signal detection device.

## Revendications

1. Procédé de fabrication d'une courroie d'entraînement (ZR) comprenant les étapes suivantes :
a) fournir un noyau de moule (21) et un moule extérieur (22) d'un outil de moulage (20), où le noyau de moule (21) est prévu pour être inséré dans le moule extérieur (22) de sorte qu'une cavité (23) reproduisant la forme de la courroie de transmission de puissance (ZR) à fabriquer est formée entre le moule extérieur (22) et le noyau de moule (21) placé dans celui-ci, et où la surface circonférentielle du noyau de moule (21) associée à la cavité (23) ou la surface circonférentielle intérieure (26) du moule extérieur (22) associée à la cavité (23) est pourvue d'une géométrie (24) à reproduire sur la courroie d'entraînement (ZR), laquelle géométrie est formée par des creux ou des élévations qui sont délimitées par des surfaces en butées les unes aux autres qui sont moulées dans la surface circonférentielle du noyau de moule (21) ou la surface circonférentielle intérieure (26) du moule extérieur (22), ou sont moulées sur la surface circonférentielle du noyau de moule (21) ou la surface circonférentielle intérieure (26) du moulé extérieur (22) ;
b) placer une couche textile (G) sur la géométrie (24) à former sur la courroie d'entraînement (ZR) ;
c) insérer le noyau de moule (21) dans le moule extérieur (22) de sorte que le noyau de moule (21) et le moule extérieur (22) définissent la cavité (23) entre eux;
d) facultativement : placer un élément de tension (Z, ZZ1, ZZ2, ZZ3) dans la cavité (23) ;
e) facultativement: fermer la cavité (23) au moins dans la région de la géométrie (24) à représenter sur la courroie d'entraînement (ZR) par rapport à l'environnement ;
f) appliquer la couche textile (G) sur les surfaces qui, au niveau du noyau de moule ou au niveau du moule extérieur, délimitent la géométrie (24) à représenter sur la bande d'entraînement (ZR), où l'application de la couche textile (G) au niveau de la géométrie est assistée par la génération d'une pression négative dans la région des espaces libres qui sont présents entre la couche textile (G) et la géométrie (24) après l'étape de travail b) ;
g) introduire un matériau de base élastomère pouvant être coulé dans la cavité (23), où le matériau de base entrant dans la cavité exerce une pression contre la couche textile reposant sur la géométrie à reproduire et la pression négative étant toujours maintenue ;
h) facultativement: introduire en supplément du matériau de base après que la cavité (23) a été complètement remplie avec le matériau de base pour provoquer une augmentation de la pression dans la cavité (23) ;
i) facultativement : maintenir la pression agissant sur le matériau de base jusqu'à ce que le matériau de base soit devenu suffisamment solide ;
j) démouler la bobine de courroie obtenue
k) facultativement : séparer la courroie d'entraînement (ZR) de la bobine de courroie.

2. Procédé selon la revéndication 1, **caractérisé en ce que** la géométrie (24) est formée au niveau de la surface circonférentielle du n noyau de moule (21).

3. Procédé selon la revendication 1, **caractérisé en ce que** la géométrie (24) est formée au niveau de la surface circonférentielle intérieure (26) du moule extérieur (22).

4. Procédé selon l'une quelconque des revendications précédentes, **caractérisé en ce que** le textile de la couche textile (G) est muni d'un revêtement réactif par rapport au matériau de base (B).

5. Procédé selon l'une quelconque des revendications précédentes, **caractérisé en ce que** le matériau de base est introduit dans la cavité (23) sous pression.

6. Procédé selon l'une des revendications précédentes, **caractérisé en ce qu'**au moins le noyau du moule (21) ou le moule extérieur (22) est chauffé.

7. Procédé selon l'une des revendications précédentes, **caractérisé en ce que**, à l'étape g), un premier matériau de base est introduit dans une première zone de la cavité (23) et un second matériau de base est introduit dans une seconde zone de la cavité (23), lequel second matériau de base diffère du premier matériau de base par au moins une propriété mécanique dans la courroie d'entraînement à l'état fini (ZR).

8. Procédé selon l'une des revendications précédentes, **caractérisé en ce que**, pour introduire l'élément de tension (Z, ZZ1, ZZ2, ZZ3) dans la cavité (étape de travail d)), l'élément de tension (Z, ZZ1, ZZ2, ZZ3) est placé autour du noyau de moule (21) avant que le noyau de moule (21) soit inséré dans le moule extérieur (22) (étape de travail c)) et est placé dans le moule extérieur (22) conjointement avec le noyau de moule (21).

9. Procédé selon l'une quelconque des revendications précédentes, **caractérisé**
- **en ce que** le matériau de base élastomère pouvant être coulé est injecté dans la cavité (23) lors de l'étape de travail g),
- **en ce que**, après l'insertion du noyau de moule (21) dans le moule extérieur (22) et avant l'injection du matériau de base (B), un élément de tension est positionné dans la cavité (23) du moule à une distance de la couche textile au moyen d'éléments auxiliaires mobiles, et
- **en ce que**, après l'injection d'une première partie du matériau de base (B), les éléments auxiliaires sont déplacés hors de la cavité (23) par étapes ou en continu, laissant l'élément de tension (Z) dans le matériau de base (B).

10. Procédé selon l'une des revendications précédentes, **caractérisé**
- **en ce que** la courroie d'entraînement à fabriquer est une courroie dentée (ZR) et
- **en ce que** la géométrie prévue au niveau de la surface circonférentielle du noyau de moule (21) ou au niveau de la surface circonférentielle intérieure (26) du moule extérieur (22) associée à la cavité (23) est une géométrie de dent (24) à reproduire sur la courroie dentée (ZR).

11. Procédé selon l'une des revendications 9 ou 10, **caractérisé en ce qu'**à l'étape d), un élément de tension (Z, ZZ1, ZZ2, ZZ3) est placé directement sur la couche textile (G) préalablement placée sur la géométrie, de sorte qu'il s'appuie sur les faces d'extrémité de la géométrie de la dent (24) par l'intermédiaire de la couche textile (G).

12. Procédé selon l'une des revendications précédentes, **caractérisé en ce que** l'élément de tension est formé comme une ébauche textile (ZZ1, ZZ2, ZZ3).

13. Procédé selon la revendication 12, **caractérisé en ce que** les fils de l'ébauche textile de l'élément de tension (ZZ1, ZZ2, ZZ3) sont disposés selon un angle par rapport à l'axe longitudinal (LX) du noyau de moule (21) qui est > 0° et < 90°.

14. Procédé selon l'une quelconque des revendications 12 ou 13, **caractérisé en ce que** l'ébauche textile de l'élément de tension est tubulaire.

15. Procédé selon l'une quelconque des revendications 12 à 14, **caractérisé en ce que** l'ébauche textile de l'élément de tension (ZZ1, ZZ2, ZZ3) est formée en forme de bande et est appliquée sur la géométrie (24) en une convolution ou en plusieurs convolutions.

16. Procédé selon l'une des revendications précédentes, **caractérisé**
- **en ce que** le matériau élastomère de base pouvant être coulé est injecté dans la cavité (23) au cours de l'étape de travail g), et
- **en ce que** la couche textile (G) côté géométrie ou l'élément de tension (ZZ1, ZZ2, ZZ3) est fixé(e) au niveau des zones du moule de coulée associées aux faces frontales (66, 67) du noyau de moule (21) avant l'injection du matériau de base (B) dans la cavité (23).

17. Procédé selon l'une des revendications précédentes, **caractérisé en ce que** l'élément de tension (Z, ZZ1, ZZ2, ZZ3) ou la couche textile (G) comprend un dispositif d'identification qui, lors de l'utilisation de la courroie d'entraînement (ZR) finie, identifie de manière univoque la courroie d'entraînement (ZR) à la manière d'élément passif et/ou, à la manière d'un élément actif, détecte au moins une propriété ou au moins un état de la courroie d'entraînement (ZR) et la (le) transmet à un dispositif de détection de signaux.
